# EUROPEAN PATENT SPECIFICATION

(11) **EP 4 152 456 B1**
(45) Date of publication and mention of the grant of the patent: **31.12.2025**
(21) Application number: 22195590.9
(22) Date of filing: 14.09.2022
(51) Int. Cl.: H01M 10/04, H01M 50/46, H01M 10/0583

(54) **ELECTRODE ASSEMBLY FOR USE IN A BATTERY, APPARATUS FOR MANUFACTURING THE SAME AND METHOD FOR MANUFACTURING THE SAME**
ELEKTRODENANORDNUNG ZUR VERWENDUNG IN EINER BATTERIE, VORRICHTUNG ZUR HERSTELLUNG DAVON UND VERFAHREN ZUR HERSTELLUNG DAVON
ENSEMBLE D'ÉLECTRODES DESTINÉ À ÊTRE UTILISÉ DANS UNE BATTERIE, APPAREIL DE FABRICATION DE CELUI-CI ET SON PROCÉDÉ DE FABRICATION

(30) Priority: 16.09.2021 KR 20210124050; 16.09.2021 KR 20210124049; 16.09.2021 KR 20210124051
(43) Date of publication of application: 22.03.2023
(73) Proprietor: LG Energy Solution, Ltd., Seoul 07335 (KR)
(72) Inventor: LEE, Byeong Kyu, 34122 Daejeon (KR); KIM, Jin Gon, 34122 Daejeon (KR); JUNG, Su Taek, 34122 Daejeon (KR); CHUNG, Joo Young, 34122 Daejeon (KR)
(74) Representative: Goddar, Heinz J.

(56) References cited:
- EP-A2- 1 261 063
- CN-A- 112 259 802
- KR-A- 20120 060 325

## Description

### TECHNICAL FIELD

The present disclosure relates to an electrode assembly for use in a battery, an apparatus for manufacturing the same and a method for manufacturing the same, and more particularly, to an electrode assembly for use in battery in which electrodes and a separator sheet are stacked in a Z-folding (or zigzag-folding) type, an apparatus for manufacturing the same and a method for manufacturing the same.

### BACKGROUND

Generally, the types of secondary batteries (rechargeable batteries) include nickelcadmium batteries, nickel-hydrogen batteries, lithium-ion batteries, lithium-ion polymer batteries, and the like. Such secondary batteries are applied and used not only to/in small-sized products such as digital cameras, P-DVD, MP3P, cellular phones, PDA, portable game devices, power tools and E-bikes, but also to/in large-sized products demanding high output such as electric and hybrid vehicles, and a power storage device for storing surplus generated power or new renewable energy and a backup power storage device.

In order to manufacture such a secondary battery, first, an electrode active material slurry may be applied to a cathode current collector and an anode current collector to prepare a cathode and an anode, which may be stacked on both sides (opposite sides) of a separator, thereby forming an electrode assembly having a predetermined shape. Then, the electrode assembly may be housed in a battery case, and an electrolytic solution may be injected and the housing may then be sealed, e.g. to form a battery cell.

Electrode assemblies may be classified into various types. For example, there may be mentioned a simple stack type in which cathodes, separators, and anodes simply cross (or are overlapped) with each other and they are continuously stacked without manufacturing a unit cell, a lamination & stack type (L&S type) in which unit cells (e.g. elementary or fundamental battery units comprising a cathode, a separator and an anode) are first manufactured using cathodes, separators, and anodes, and then these unit cells are stacked, a stack & folding type (S&F type) in which a plurality of unit cells are spaced apart and attached to a surface of a separator sheet having a long length (e.g. an elongated or strip-like separator sheet), and the separator sheet is repeatedly folded (or rolled) in the same direction from one end, a Z-folding type (zigzag-folding type) in which a plurality of electrodes or unit cells are alternately attached to a surface and the other (opposite) surface of a separator sheet whose length is long on one side (e.g. an elongated or strip-like separator sheet), and the separator sheet is repeatedly and alternately folded in a specific direction from one end and then folded in the opposite direction (e.g. such that the separator sheet assumes a zigzag or meandering shape), and the like. Among them, the Z-folding type has high alignment degree and impregnation degree of the electrolytic solution, and thus is often used in recent years.

Conventionally, however, after the electrodes and the separator sheet are stacked in this Z-folding type, no additional lamination process is performed, which may cause a problem that the electrodes and the separator sheet do not (or not sufficiently) adhere to each other and thus, the electrodes may be offset or displaced from a target position. To solve this problem, an additional lamination process may be performed after stacking the electrodes and the separator sheet, but the overall thickness of the stacked body in which the electrodes and the separator sheet are stacked may be large, which may cause a problem that heat is not transferred to the interior of the stacked body, and thus the adhesive strength may be lowered. Additionally, in order to perform such an additional lamination process, there may also be a problem that the electrodes may be offset or displaced from the target position in the process of transferring the stacked body. This problem may be aggravated further depending on the material of the separator sheet when the adhesive strength of the separator sheet itself is low.

Therefore, there is a need to develop a Z-folding type electrode assembly for use in a battery (e.g. in a battery cell) having improved battery cell performance, while preventing the electrodes from being offset or displaced from a target position, an apparatus for manufacturing the same, and a method for manufacturing the same.

CN 112 259 802 A discloses a lithium-ion battery stacking device comprising a pair of electrode supply units, a separator conveying device, a stacking platform and a glue dispensing device arranged above the stacking platform.

EP 1 261 063 A2 discloses an automated manufacturing system for manufacturing a secondary lithium battery comprising a separator supply unit, an adhesive applying unit for applying adhesive to a separator, a lamination unit for laminating said separator with electrode plates, a transportation unit and a packing unit for folding a batch of said separator laminated with electrode plates.

KR 2012 0060325 A discloses an electrode supply device comprising rotating rolls for supplying a separator, a pair of adhesive application devices for applying adhesive to the separator, a pair of electrode supply members for attaching electrodes to said separator and a folding member for folding the separator with the electrodes attached thereto.

### SUMMARY OF THE DISCLOSURE

### TECHNICAL PROBLEM

It is an object of the present disclosure to provide an electrode assembly for use in a battery in which electrodes and a separator sheet are stacked in a Z-folding type, and the electrodes can be prevented from being offset or displaced from a target position, an apparatus for manufacturing the same and a method for manufacturing the same.

The objects of the present disclosure are not limited to the aforementioned object, and other objects which are not described herein should be clearly understood by those skilled in the art from the following detailed description and the accompanying drawings.

### TECHNICAL SOLUTION

This object is met by an apparatus for manufacturing an electrode assembly for use in a battery according to claim 1, a method of manufacturing an electrode assembly for use in a battery according to claim 9, an electrode assembly according to claim 13 and a battery cell according to claim 15. Examples thereof are detailed in the dependent claims.

The present disclosure provides an apparatus for manufacturing an electrode assembly for use in a battery (e.g. in a battery cell), in particular in a secondary battery (e.g. in a battery cell of or for use in a secondary battery).

The apparatus comprises an electrode supply unit configured to provide (or supply) a plurality of (individual or separate) electrodes, e.g. cathodes and/or anodes. The electrode supply unit may for example be configured to provide the electrodes from an electrode sheet (e.g. a continuous electrode sheet). The electrode supply unit may e.g. be or comprise an electrode reel, from which the electrode sheet may be unwound. In some examples, the electrode supply unit may be configured to cut the electrodes from the electrode sheet. Additionally or alternatively, the electrode supply unit may e.g. be configured to provide the electrodes from a supply of pre-formed electrodes such as a stack of pre-formed electrodes. The electrode supply unit may be configured to arrange (e.g. place or seat) one or more electrodes on a stacking table, e.g. as described below.

The apparatus further comprises a separator supply unit configured to provide (or supply) a continuous separator sheet, for example to advance or move the separator sheet (e.g. a front end or front portion thereof) towards a stacking table as described below. The separator supply unit may for example be or comprise a separator reel, from which the separator sheet may be unwound. The separator supply unit may e.g. be configured to unwind the separator sheet from the separator reel and to advance the separator sheet from the separator reel towards the stacking table. The continuous separator sheet may have a length that is much larger than a length or physical dimension of the electrodes, e.g. at least five times, in some examples at least ten times, in one example at least twenty times the length of physical dimension of the electrodes. Put differently, the continuous separator sheet may not be cut or otherwise formed or shaped into a specific shape or form (e.g. to match a physical dimension of the electrodes) along its length, but may e.g. be a single continuous piece of material. The separator sheet may be configured to be folded and may e.g. comprise or consist of a flexible material. The separator sheet may be configured to physically separate and electrically insulate electrodes from each other and may e.g. comprise or consist of an electrically insulating material. The separator sheet may be configured to accommodate an electrolytic solution and may e.g. comprise or consist of porous material.

The apparatus further comprises a stacking table for stacking the electrodes thereon with the separator sheet folded between the electrodes to form the electrode assembly. The stacking table may for example comprise a surface (e.g. an upper or top surface) on which the first and second electrodes and the separator sheet can be arranged (e.g. placed or seated on).

The apparatus further comprises a separator guide configured to guide the folding (e.g. a folding direction) of the separator sheet. The separator guide may for example be configured to guide the folding of the separator sheet by controlling a position of the separator sheet (e.g. a position at which the separator sheet is provided or supplied by or from the separator supply unit) relative to the stacking table. The separator guide may comprise one or more guiding surfaces configured to come in contact with the separator sheet to guide the folding, e.g. a pair of opposing guiding surfaces between which the separator sheet may be arranged. The separator guide may for example comprise one or more guiding rollers (or rolls), e.g. a pair of guiding rollers between which the separator sheet may be arranged.

The separator guide and the stacking table are configured to move relative to each other at least along a first direction (e.g. one or both of the separator guide and the stacking table may be movable), for example to perform the folding of the separator sheet on the stacking table. Put differently, the separator guide is configured to move along a first direction relative to the stacking table and/or vice-versa. The separator guide and/or the stacking table may for example be configured to move or translate linearly (e.g. back and forth/to reciprocate linearly), e.g. along a straight path or line (for example only along the first direction) and/or along a curved path (e.g. at least in part also along a second direction perpendicular to the first direction). The stacking table may for example move in a direction opposite to a direction that the separator guide is moving in. The separator guide and/or the stacking table may be configured to move back and forth (e.g. to linearly reciprocate left and right) between different parts of the electrode supply unit such as a first electrode placement device and a second electrode placement device. In one example, the stacking table may be configured to rotate back and forth (e.g. to perform a reciprocating rotating motion), either instead of or in addition to a linear motion or translation.

As used herein, the first direction may for example be a direction that is different from a stacking direction of the electrode assembly (e.g. different from a normal direction of a surface of the stacking table that the electrodes are stacked on), for example a direction that is tilted or inclined (e.g. at an angle) with respect to the stacking direction, in particular a direction that is perpendicular to the stacking direction (e.g. at an angle between 75° and 105° to the stacking direction, in some examples between 85° and 95° to the stacking direction, in one example 90° to the stacking direction). Additionally or alternatively, the first direction may for example be a direction extending between different parts of the apparatus and in particular different parts of the electrode supply unit such as e.g. between first and second electrode supply units and/or between the first electrode placement device and the second electrode placement device. In some examples, the first direction may be horizontal or substantially horizontal (e.g. at an angle of between 75° and 105° to a direction of gravity).

The electrode supply unit may be configured to alternately arrange (e.g. place or seat) electrodes (e.g. first and second electrodes of different polarity) on the stacking table, for example to form a stack in which first and second electrodes are arranged alternately (i.e. a second electrode on top of a first electrode, another first electrode on top of the second electrode and so on or vice-versa). The separator guide may guide the folding of the separator sheet such that the separator sheet is folded between the first and second electrodes. The separator guide may guide the folding of the separator sheet such that the separator sheet is folded in a zigzag or meandering shape (Z-folding), e.g. such that the separator sheet extends from left to right between a first electrode and a second electrode and from right to left between said second electrode and another first electrode arranged on said second electrode and so on. Preferably, the separator sheet is folded without cutting the separator sheet, i.e. such that the separator sheet remains a continuous sheet.

The apparatus also comprises a first adhesive applicator configured to apply (e.g. deposit or coat) an adhesive to (e.g. on) at least a part of the separator sheet located between the separator guide and the stacking table (e.g. to regions or portions of the separator sheet that an electrode is to be arranged on and/or covered with). In some examples, the first adhesive applicator may additionally be configured to apply the adhesive to an electrode, in particular an electrode arranged on the stacking table. The first adhesive applicator may for example be or comprise a nozzle and/or a dispenser (which may also be referred to as an upper nozzle or dispenser). The first adhesive applicator may be configured to apply the adhesive by spraying, dispensing and/or otherwise depositing the adhesive, e.g. at/on a surface of the respective object.

The apparatus further comprises a first deflector configured to deflect (or divert) the separator sheet between the separator guide and the stacking table for maintaining an orientation and/or a distance of the separator sheet relative to the first adhesive applicator (e.g. a relative angle and/or a distance from the first adhesive applicator) while the separator guide is moving relative to the stacking table and/or vice-versa. The first deflector may for example be configured to change a direction of travel of the separator sheet (advance direction, e.g. the direction in which the separator sheet is advanced), e.g. an angle thereof relative to a surface of the stacking table and/or to the first adhesive applicator. Put differently, the direction of travel of the separator sheet in front of or upstream of the first deflector may be different from the direction of travel behind or downstream of the first deflector. The first deflector may be configured to deflect the separator sheet in at least a certain range of relative positions between the separator guide and the stacking table, e.g. when the stacking table is arranged on a first side of the separator guide or within a certain region or range on the first side of the separator guide.

The first deflector may be configured to prevent the separator sheet from extending or advancing from the separator guide to the stacking table along a straight line or path. The first deflector may e.g. be arranged such that the separator sheet is forced to take a different path, e.g. to form a curve, kink or corner between the separator guide and the stacking table, in at least a certain range of relative positions between the separator guide and the stacking table.

As used herein, maintaining said orientation and distance while the separator guide is moving relative to the stacking table and/or vice-versa may for example refer to reducing a variation or change in the respective quantity or parameter while the separator guide and the stacking table are moving relative to each other, e.g. as compared to a situation in which the first deflector is not present. The first deflector may for example be configured to maintain said orientation and/or distance within certain bounds (e.g. an upper and/or lower limit) as detailed below. For example, the first deflector may deflect the separator sheet such that an outlet of the first adhesive applicator (e.g. a nozzle thereof) remains at a predefined angle, in particular perpendicular (e.g. between 75° and 105°, in some examples between 85° and 95°) to a surface of the separator sheet. The first deflector may be configured to deflect the separator sheet and/or maintain said orientation and/or distance over at least a part of a travel or operating range of the separator guide and/or the stacking table (e.g. within a certain range of absolute and/or relative positions of the separator guide and/or the stacking table). In some examples, the first deflector may be or comprise one or more deflecting rollers (or rolls), for example a tension or pressure roller configured to press and/or apply tension to the separator sheet guided from the separator.

In some examples, the apparatus may further comprise a second adhesive applicator configured to apply an adhesive to at least a part of the separator sheet located between the separator guide and the stacking table. Put differently, the apparatus may comprise a pair of adhesive applicators, e.g. a pair of (upper) nozzles. The second adhesive applicator may be embodied as described above for the first adhesive applicator. The first and second adhesive applicators may for example be configured to apply adhesive to opposite surfaces of the separator sheet, i.e. the first adhesive applicator to a first surface of the separator sheet and the second adhesive applicator to a second surface of the separator sheet opposite to the first surface.

The apparatus may comprise a second deflector configured to deflect the separator sheet between the separator guide and the stacking table for maintaining an orientation and/or a distance of the separator sheet relative to the second adhesive applicator while the separator guide is moving relative to the stacking table and/or vice-versa. In other words, the apparatus may comprise a pair of deflectors (e.g. a pair of tension or pressure rollers). The first deflector may be configured to control or adjust the orientation and/or distance relative to the first adhesive applicator, for example in a first range of relative positions between the separator guide and the stacking table (e.g. when the stacking table is arranged on a first side of the separator guide). The second deflector may be configured to control or adjust the orientation and/or distance relative to the second adhesive applicator, for example in a second range of relative positions between the separator guide and the stacking table (e.g. when the stacking table is arranged on a second side of the separator guide opposite to the first side). The second deflector may for example be embodied as described above for the first deflector.

In some examples, the separator guide may be arranged between the first and second deflectors along the first direction. The separator guide may for example be configured to guide the separator sheet such that the separator sheet is arranged or advances between the first and second deflectors. The separator guide may be configured to guide the separator sheet such that the separator sheet comes in contact with the first deflector when the stacking table is moved or positioned to/on a first side of the separator guide and comes in contact with the first deflector when the stacking table is moved or positioned to/on a second side of the separator guide opposite to the first side.

In some examples, the separator guide comprises a pair of guiding surfaces, in particular a pair of guiding rollers, for guiding the folding of the separator sheet. A distance between the first and second deflectors may larger than a distance between said guiding surfaces. The distance between the first and second deflectors may for example be at least two times, in some examples at least five times, in one example at least ten times and in one example at least twenty times the distance between said guiding surfaces. The distance between the guiding surfaces may for example be similar to a thickness of the separator sheet, e.g. between one and five times, in one example between one and three times the thickness of the separator sheet.

In some examples, the first deflector may be arranged between the first adhesive applicator and the separator guide along the first direction. Additionally or alternatively, the second deflector may arranged between the separator guide and the second adhesive applicator along the first direction. Put differently, the separator guide may e.g. be arranged between the first and second deflectors and the first and second deflectors may e.g. be arranged between the first and second adhesive applicators.

In some examples, the first deflector and/or the second deflector each are or comprise a deflecting roller. Said deflecting roller may in particular be arranged between the separator guide and the stacking table, e.g. along a second direction perpendicular to the first direction. The deflecting rollers may for example be configured to be rotated actively and/or passively (e.g. may be actuated or freewheeling). The deflecting rollers may have a length that is approximately equal to or larger (e.g. slightly larger) than a width of the separator sheet, e.g. such that the deflecting rollers extend over the entire width of the separator sheet. The deflecting rollers may be pressure or tension rollers that press (e.g. are arranged so as to press) against the separator sheet guided from the separator guide, e.g. to thereby apply tension to and/or deflect the separator sheet.

The first deflector and/or the second deflector may be fixed (e.g. permanently fixed) or configured to be fixed (e.g. configured to be fixed temporarily) relative to the separator guide at least along the first direction, in some examples along every direction (i.e. such that the first and/or second deflectors cannot move relative to the separator guide along the respective directions). The first and/or second deflectors may for example be permanently fixed or may be configured to be moved, e.g. for alignment and/or servicing purposes, before being temporarily fixed, e.g. using fixation tools such as screws or fasteners. In some examples, some or all of the separator guide, the first and/or second adhesive applicators and the first and/or second deflectors may be fixed relative to each other. The separator guide, the first and/or second adhesive applicators and/or the first and/or second deflectors may e.g. be mounted in or on a common carriage configured to move along the first direction.

The first deflector and/or the second deflector may for example be configured to deflect the separator sheet such that an angle between the separator sheet and the first and second adhesive applicator, respectively, varies by less than 20°, preferably by less than 10°, in one example by less than 5° while the first and second adhesive applicator, respectively, applies the adhesive to a portion of the separator sheet on which an electrode is to be arranged (i.e. within the range of relative positions between the separator guide and the stacking table in which the respective applicator is to apply the adhesive to the separator sheet, for example while the respective adhesive applicator moves across the stacking table, e.g. from one end of the stacking table to the other end of the stacking table). Said angle may for example be the angle at which the respective adhesive applicator applies the adhesive to the separator sheet (e.g. a spray angle). The angle may for example be between 60° and 120°, in some examples between 75° and 105°, in one example between 85° and 95°.

Additionally or alternatively, the first deflector and/or the second deflector may for example be configured to deflect the separator sheet such that a distance between the separator sheet and the first and second adhesive applicator, respectively, varies by less than 25%, preferably by less than 10%, in one example by less than 5% while the first and second adhesive applicator, respectively, applies the adhesive to said portion of the separator sheet on which an electrode is to be arranged (for example while the respective adhesive applicator moves across the stacking table, e.g. from one end of the stacking table to the other end of the stacking table). Said distance may for example be the distance from an outlet of the respective adhesive applicator (e.g. a nozzle outlet) to the portion of the separator sheet to which the adhesive is applied.

Maintaining the orientation and/or the distance between the first and/or second adhesive applicators and the separator sheet may for example allow for a more homogeneous application (e.g. deposition) of the adhesive.

In some examples, the electrode supply unit may comprise a first electrode supply unit configured to provide a plurality of first electrodes (e.g. cathodes or anodes) and a second electrode supply unit configured to provide a plurality of second electrodes (e.g. of an opposite polarity, i.e. anodes or cathodes). Each of the first and second electrode supply units may be embodied as described above for the (main) electrode supply unit. The first/second electrode supply unit may for example be configured to provide the first/second electrodes from a first/second electrode sheet (e.g. a continuous first/second electrode sheet). The first/second electrode supply unit may e.g. be or comprise a first/second electrode reel, from which the first/second electrode sheet may be unwound. In some examples, the first/second electrode supply unit may be configured to cut the first/second electrodes from the first/second electrode sheet. Additionally or alternatively, the first/second electrode supply unit may e.g. be configured to provide the first/second electrodes from a supply of pre-formed electrodes such as a stack of pre-formed first/second electrodes. The first/second electrode supply unit may be configured to arrange (e.g. place or seat) one or more first/second electrodes on a stacking table.

One or both of the first and second electrode supply units may comprise a first/second electrode placement device (e.g. an electrode placement head or header) that is configured to hold (e.g. adsorb or grab) a first/second electrode and to place (e.g. seat) said electrode on the stacking table. Additionally or alternatively, one or both of the first and second electrode supply units may comprise a transfer device (e.g. a roller conveyer, a conveyer belt and/or a moving floor) configured to transfer a first/second electrode on a transfer surface of said transfer device towards the stacking table and/or towards an electrode placement device, for example from a first/second electrode reel.

The separator guide and/or the stacking table may be configured to move back and forth between the first and second electrode supply units along the first direction, e.g. between different parts of the first and second electrode supply units such as the first and second electrode reels, the first and second transfer devices and/or the first and second electrode placement devices.

Some or all of the separator guide, the first adhesive applicator, the second adhesive applicator, the first deflector and the second deflector may be fixed (e.g. permanently) or configured to be fixed (e.g. configured to be fixed temporarily) at least along the first direction, in some examples along every direction. The stacking table may be configured to move back and forth along the first direction.

In other examples, the table may be fixed (e.g. permanently) or configured to be fixed (e.g. configured to be fixed temporarily) at least along the first direction, in some examples along every direction. Some or all of the separator guide, the first adhesive applicator, the second adhesive applicator, the first deflector and the second deflector may be configured to move back and forth along the first direction.

Elements that are configured to be (temporarily) fixed may for example be configured to be moved, e.g. for alignment and/or servicing purposes, before being temporarily fixed, e.g. using fixation tools such as screws or fasteners.

Some or all of the separator guide, the first adhesive applicator, the second adhesive applicator, the first deflector and the second deflector may be arranged in and/or on a movable carriage, e.g. a movable carriage that is configured to move back and forth along the first direction. The carriage may for example be or comprise a movable box (moving box) that houses the respective elements. The movable box may e.g. only be partially closed or may comprise one or more openings, e.g. to allow for application of the adhesive and/or for the separator sheet to enter and leave the box. In other examples, the carriage may for example be or comprise a frame or a platform that the respective elements are mounted on (e.g. attached to).

The first adhesive applicator and/or the second adhesive applicator may be configured to apply an adhesive to a respective portion of the separator sheet (e.g. a first surface thereof) while (e.g. simultaneously at least in part) said portion is being folded onto an electrode arranged on the stacking table (e.g. with a second surface of said portion opposite to the first surface facing the electrode). For example, the respective adhesive applicator and the separator guide may move relative to the stacking table (or vice-versa) simultaneously to at the same time arrange a portion of the separator sheet on said electrode and apply adhesive to the first (e.g. upper or exposed) surface of said portion (e.g. by the respective applicator moving along or across said portion of the separator sheet and/or vice-versa).

The first adhesive applicator and/or the second adhesive applicator may further be configured to apply the adhesive to an electrode arranged on the stacking table, e.g. to an upper or exposed surface of said electrode. For example, the respective adhesive applicator and the stacking table may be configured to move relative to each other such that the respective adhesive applicator is moved along or across said electrode arranged on the stacking table (and/or vice-versa). The respective applicator may in particular be configured to apply the adhesive while a portion of the separator sheet is being folded onto said electrode arranged on the stacking table, e.g. by the separator guide moving simultaneously or together with the respective adhesive applicator.

In some examples, the first adhesive applicator may be configured to apply the adhesive to a portion of the separator sheet that is to cover an electrode arranged on the stacking table while (e.g. simultaneously at least in part) the second adhesive applicator applies the adhesive to said electrode. Additionally or alternatively, the second adhesive applicator may be configured to apply the adhesive to a portion of the separator sheet that is to cover an electrode arranged on the stacking table while (e.g. simultaneously at least in part) the first adhesive applicator applies the adhesive to said electrode.

The first adhesive applicator and/or the second adhesive applicator each may be configured to rotate and/or move to adjust said orientation and said distance, respectively, relative to the separator sheet, e.g. to orient and/or position a nozzle thereof relative to the separator sheet. The first adhesive applicator and/or the second adhesive applicator may in particular be configured to rotate and/or move to maintain an angle and/or a distance between the respective adhesive applicator and the separator sheet while applying the adhesive and/or while the stacking table and the separator guide are moving relative to each other, e.g. as an additional measure for improving uniformity of the applied adhesive in addition to the first and/or second deflectors. The first adhesive applicator and/or the second adhesive applicator may for example be configured to move along a second direction different from (e.g. at an angle to) and in particular perpendicular to the first direction for adjusting said distance.

In some examples, the first deflector and/or the second deflector may be configured to apply pressure to a portion of the separator sheet that is folded or being folded onto an electrode arranged on the stacking table for spreading adhesive arranged between said portion of the separator sheet and said electrode. For example, the respective deflector(s) may be configured to increase a tension in the separator sheet, e.g. may be arranged such that there is a higher tension in the separator sheet than if the deflector were removed. The respective deflector(s) may e.g. be arranged such that a travel path of the separator sheet from the separator guide to the stacking table becomes longer (e.g. as a result of a curve, kink or corner being formed). The respective deflector(s) may be configured to deflect the separator sheet such that an angle between the separator sheet and a surface of the table that the separator sheet is (being) folded onto decreases, e.g. by at least 10°, in some examples by at least 20° (i.e. the separator sheet may be deflected by at least 10°, in some examples by at least 20° at the deflector). The respective deflector(s) may be configured to deflect the separator sheet such that said angle is less than 20°, preferably less than 10°, in one example less than 5° when the separator guide and the stacking table are at their maximum distance from each other and/or are in a configuration or position in which electrodes are to be arranged on the stacking table.

In some examples, the first adhesive applicator and/or the second adhesive applicator may be configured to apply the adhesive uniformly (e.g. to spread the adhesive homogeneously over the respective object). Preferably, the first adhesive applicator and/or the second adhesive applicator is/are configured to apply the adhesive selectively, in particular by applying a plurality of spots of the adhesive and/or a plurality of lines of the adhesive, e.g. as detailed below for the electrode assembly according to the present disclosure.

In specific examples, the first adhesive applicator and/or the second adhesive applicator may be configured to apply the respective adhesive such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the first adhesive applicator and/or the second adhesive applicator may be configured such that the respective adhesive to occupies 0.01% to 50%, particularly 0.05% to 30%, and more particularly 0.08% to 1% of a total area of the respective adjacent electrode in a plan view (i.e., normal to the respective adjacent electrode).

In some examples, the apparatus may be configured to execute some or all of the steps of a method of manufacturing an electrode assembly according to any one of the examples disclosed herein. The apparatus may for example comprise a controller configured to control some or all of the components of the apparatus such as the first and second electrode supply units, the separator supply unit, the stacking table, the separator guide and the first and second adhesive applicators to execute the respective steps. The controller may be implemented in hardware, software or a combination thereof and may for example comprise a processor and a storage device storing instructions for execution by the processor to provide the respective functionality.

In some examples, the electrode supply unit may be or comprise an electrode reel on which an electrode sheet having a plurality of electrodes formed thereon is unwound. In some examples, the separator supply unit may be or comprise a separator reel in which a separator sheet that is folded when the electrodes are seated, covers the electrodes and is stacked with the electrodes is unwound. In some examples, the stacking table may be or comprise a table on which the electrode and the separator sheet are seated on the upper surface. In some examples, the separator guide may guide the folding direction of the separator sheet. In some examples, the first adhesive applicator (or the first and second adhesive applicators) may be or comprise a pair of upper nozzles that apply an adhesive to at least a part of the separator sheet or the electrode seated on the table. In some examples, the first deflector (or the first and second deflectors) may be or comprise a pair of pressure rollers that press the separator sheet guided from the separator guide.

The present disclosure further provides a method of manufacturing an electrode assembly for use in a battery. The method may for example be executed with an apparatus for manufacturing an electrode assembly according to any one of the examples disclosed herein, but is not limited thereto and may also be executed with other suitable apparatuses.

The method comprises arranging a first portion of a continuous separator sheet (e.g. supplied from a separator supply unit) on a stacking table using a separator guide for guiding the separator sheet. The first portion of the separator sheet may for example be arranged on a surface of the stacking table or on an electrode (e.g. a first or second electrode) arranged on the stacking table (e.g. on another portion of the separator sheet that is already arranged on the stacking table). The first portion of the separator sheet may be provided by a separator supply unit, e.g. as described above, for example by advancing the separator sheet towards the stacking table and/or a separator guide. In some examples, the separator sheet may be unwound from a separator reel (e.g. along or through the separator guide). The first portion of the separator sheet is arranged on the stacking table using the separator guide (e.g. as described above), for example by moving the stacking table and the separator guide relative to each other to fold or place the first portion of the separator sheet on the stacking table, e.g. by moving the stacking table and/or the separator guide along the first direction as described above.

The method further comprises applying an adhesive to at least a part of said first portion of the separator sheet (e.g. to a surface thereof that is to face the first electrode) using a first adhesive applicator (e.g. a first (upper) nozzle or dispenser). The adhesive is applied while (e.g. simultaneously at least in part) said first portion is being arranged on the stacking table, for example by moving the separator guide and the first adhesive applicator simultaneously or together relative to the stacking table and/or vice-versa. Put differently, the steps of arranging the first portion and applying the adhesive to said first portion may be executed simultaneously at least in part. The adhesive may be applied (e.g. sprayed, dispensed or otherwise deposited) uniformly or preferably selectively, e.g. in a plurality of spots and/or lines as described below for the electrode assembly according to the present disclosure. The adhesive may be applied while moving the first adhesive applicator along (e.g. across) the first portion, e.g. by moving the first adhesive applicator and/or the stacking table along the first direction (e.g. in opposite directions). The adhesive may e.g. be applied prior to arranging the first electrode on the first portion of the separator sheet.

The method further comprises arranging a first electrode on said first portion of the separator sheet (e.g. using an electrode supply unit), in particular after applying the adhesive thereto. This may for example comprise placing the first electrode on the first portion using an electrode placement device of the electrode supply unit. This may further comprise picking up or grabbing the first electrode with the electrode placement device, e.g. from an electrode stack or from a transfer device. In some examples, this may also comprise forming the first electrode, for example by cutting a first electrode sheet, wherein the first electrode sheet may e.g. be unwound from a first electrode reel.

The separator guide and the stacking table are moved relative to each other for arranging the first portion on the stacking table (e.g. along the first direction), for example by moving one or both of said elements (e.g. in opposite directions). The separator sheet is being deflected by a first deflector (e.g. a first deflecting roller) arranged between the separator guide and the stacking table to maintain an orientation and/or a distance of the separator sheet relative to the first adhesive applicator while the separator guide and the stacking table are moving relative to each other, for example as described above for the apparatus according to the present disclosure. For example, as the separator guide and the stacking table are moved relative to each other, the separator sheet may come in contact with the first deflector (e.g. at a particular relative position between the separator guide and the stacking table). When moving the separator guide and the stacking table further relative to each other (e.g. further apart), the separator guide may deflect (or divert) the separator sheet (e.g. change a direction of travel). The first deflector may e.g. be configured to be in contact with and deflect separator sheet while the first adhesive applicator applies adhesive to the separator sheet (e.g. when the separator guide and the stacking table are in a corresponding range of relative positions in which the adhesive is to be applied). The separator guide may for example prevent the separator sheet from running along a straight line from the separator guide to the stacking table, but may e.g. force the separator sheet to run along or form a curve, corner or kink, e.g. as described above. The first deflector (e.g. the first deflecting roller such as a tension or pressure roller) may press the separator sheet guided by the separator while seating the separator sheet on the stacking table.

In some examples, the method may further comprise folding the separator sheet to cover the first electrode arranged on the first portion with a second portion of the separator sheet (e.g. such that the second portion extends parallel to the first portion). The separator sheet may be folded using the separator guide to guide the separator sheet, e.g. by moving the stacking table and the separator guide relative to each other, for example by moving the stacking table and/or the separator guide along the first direction. The first electrode may be covered with the second portion such that the adhesive is arranged between (e.g. in contact with both of) said first electrode and said second portion. The second portion may be adjacent to (e.g. border or adjoin) the first portion. The second portion may be arranged upstream of the first portion along the length of the separator sheet, i.e. such that the first portion is in front of the second portion in the direction of travel (and thus arranged on the stacking table before the second portion).

The method may further comprise applying an adhesive to at least a part of said second portion of the separator sheet using a second adhesive applicator (for example a second (upper) nozzle or dispenser). The adhesive may in particular be applied while (e.g. simultaneously at least in part) said second portion is being arranged (folded) on the first electrode. Put differently, the steps of arranging the second portion on the first electrode and applying the adhesive to said second portion may be executed simultaneously at least in part. The adhesive may for example be applied onto a surface of said second portion that is facing away from the first electrode (e.g. exposed after first electrode is covered with the second portion, for example a surface that the second electrode is to be arranged on). The adhesive may be applied as described above for the first adhesive applicator.

The method may further comprise arranging a second electrode on said second portion of the separator sheet, in particular after folding said separator sheet to cover said first electrode. The second electrode may for example be arranged using an electrode supply unit, e.g. as described above. The second electrode may be arranged on the second portion as described above for arranging the first electrode on the first portion, e.g. by cutting a second electrode sheet unwound from a second electrode reel, picking up the second electrode with an electrode placement device and/or placing the second electrode on the second portion using the electrode placement device. The first and second electrodes and the first and second portions of the separator sheet may form a unit cell of the electrode assembly, e.g. an elementary structure that can be arranged (e.g. stacked) repeatedly to form the electrode assembly.

The separator guide and the stacking table may be moved relative to each other for folding the separator sheet, e.g. as described above. The separator sheet may be deflected by a second deflector arranged between the separator guide and the stacking table to maintain an orientation and/or a distance of the separator sheet relative to the second adhesive applicator while the separator guide and the stacking table are moving relative to each other, e.g. as described above for the first deflector. The first and second deflectors may for example be embodied as described above for the apparatus according to the present disclosure.

The method may further comprise folding the separator sheet to cover the second electrode arranged on the second portion with a third portion of the separator sheet, e.g. using the separator guide to guide the separator sheet. The third portion may be adjacent to (e.g. border or adjoin) the second region. The third portion may be arranged upstream of the second portion along the length of the separator sheet. In some examples, the first and third portion of the separator sheet may collectively be referred to or be part of a first region of the separator sheet (e.g. a first region on which first electrodes are to be arranged on). For covering the second electrode, the separator sheet may be folded in an opposite direction as for covering the first electrode, e.g. such that the separator sheet assumes a zigzag or meandering shape.

In some examples, the method may further comprise applying the adhesive to the first electrode (e.g. an upper portion or a surface thereof that is to be covered by the separator sheet) arranged on the first portion of the separator sheet and/or to at least a part of a portion of the separator sheet that is to cover the first electrode (e.g. the second portion). The adhesive may for example be applied using the first adhesive applicator. Additionally or alternatively, the method may also comprise applying the adhesive to the second electrode (e.g. an upper portion or a surface thereof that is to be covered by the separator sheet) arranged on the second portion of the separator sheet and/or to at least a part of a portion of the separator sheet that is to cover the second electrode (e.g. a third portion of the separator sheet that is adjacent (e.g. upstream) of the second portion). The adhesive may for example be applied using the second adhesive applicator.

The adhesive may for example be applied to a surface of the respective portion of the separator sheet that is to face the respective (first or second) electrode. In some examples, the adhesive may be applied to the respective electrode while (e.g. simultaneously at least in part) the separator sheet is being folded to cover said electrode, e.g. by moving the separator guide and the respective adhesive applicator simultaneously relative to the stacking table and/or vice-versa. Put differently, the steps of applying adhesive to the respective electrode and covering said electrode with the separator sheet may be executed simultaneously at least in part (e.g. by applying adhesive to a first part of the respective electrode while covering a second part of the respective electrode, to which adhesive has already been applied before). Additionally or alternatively, the adhesive may be applied to the respective electrode and/or portion of the separator sheet prior to folding the separator sheet to cover said electrode.

In some examples, the adhesive may be applied to said part of the second portion of the separator sheet and to the first electrode arranged on the first portion of the separator sheet simultaneously at least in part. For example, the first and second adhesive applicators may apply adhesive simultaneously, e.g. the first adhesive applicator to the first electrode and the second adhesive applicator to the second portion of the separator sheet. At the same time, the separator sheet may be folded to cover the first electrode with the second portion of the separator sheet.

For arranging the first and/or second portions of the separator sheet on the stacking table, the stacking table may be fixed along at least the first direction, in some examples along every direction. The stacking table may be fixed permanently or temporarily, for example as described above (e.g. only or at least while arranging said portions on the stacking table). Instead, some or all of the separator guide, the first and/or second adhesive applicators and/or the first and/or second deflectors may be moved along the first direction, e.g. by moving a carriage that the respective elements are mounted on or in, to arrange said portions on the stacking table.

In other examples, some or all of the separator guide, the first and/or second adhesive applicators and/or the first and/or second deflectors may be fixed (e.g. permanently or temporarily) along at least the first direction, in some examples along every direction for arranging the first and/or second portions of the separator sheet on the stacking table. Instead, the stacking table may be moved along the first direction to arrange said portions on the stacking table.

The method may further comprise repeatedly executing some or all of the steps described above (e.g. arranging a first/second electrode, applying the adhesive and folding the separator sheet to cover the respective electrode), for example to stack a plurality of first and second electrodes on the stacking table with the separator sheet folded or interposed therebetween, e.g. in a zigzag shape (Z-type folding arrangement). In some examples, the method may further comprise arranging or integrating the electrode assembly in/into a battery cell, e.g. by housing the electrode assembly in a battery case with an electrolytic solution. This may comprise dissolving the adhesive in the electrolytic solution at least in part, e.g. by application of pressure and/or heat.

In some examples, the method comprises cutting a first electrode sheet unwound from a first electrode reel to form a plurality of first electrodes. In some examples, arranging said first portion of the separator sheet is or comprises guiding the separator sheet unwound from a separator reel along a separator guide, seating the separator sheet on a table in a state where a first pressure roller presses the separator sheet guided by the separator guide and an adhesive is being applied to a first region of the separator sheet from a first upper nozzle. In some examples, arranging the first electrode on said first portion of the separator sheet is or comprises seating the first electrode on a first region of the separator sheet. In some examples, applying the adhesive to at least said part of the first portion of the separator sheet is or comprises applying an adhesive to a first region of the separator sheet from a first upper nozzle. In some examples, the method comprises folding the separator sheet in a folding direction guided by the separator guide, so that a second region of the separator sheet covers the first electrode.

The present disclosure further provides an electrode assembly for use in a battery (e.g. in a battery cell), in particular in a secondary battery (e.g. in a battery cell of or for use in a secondary battery). The electrode assembly comprises a plurality of first electrodes (e.g. cathodes or anodes) and a plurality of second electrodes (e.g. anodes and cathodes, respectively). The first and second electrodes are alternately stacked (e.g. a first electrode, then a second electrode, then another first electrode, then another second electrode and so on).

The first and second electrodes are separated from each other by a separator sheet that is folded between the first and second electrodes in a zigzag shape (Z-type folding). The separator sheet may be a single continuous sheet. The separator sheet may be folded such that each pair of adjacent electrodes (e.g. a first electrode and a second electrode arranged on the first electrode or vice-versa) are separated from each other by a respective portion of the separator sheet arranged or interposed therebetween.

An adhesive is arranged between the separator sheet and the first electrodes and/or between the separator sheet and the second electrodes. The adhesive may for example be arranged between a first electrode and a respective (first) portion of the separator sheet that said first electrode is arranged on and/or between said first electrode and a respective (second) portion of the separator sheet that covers said first electrode. Additionally or alternatively, the adhesive may for example be arranged between a second electrode and a respective (second) portion of the separator sheet that said second electrode is arranged on and/or between said second electrode and a respective (third) portion of the separator sheet that covers said second electrode.

The adhesive may be configured to be dissolved in an electrolytic solution for use in a battery cell. For example, the adhesive may be configured to be dissolved partially or entirely when coming in contact with the electrolytic solution. The adhesive may be configured to be dissolved in the electrolytic solution by application of heat and/or pressure. The adhesive may for example dissolve at a temperature between 0 °C and 300 °C, in some examples between 10 °C and 250 °C, or between 20 °C and 200 °C, or particularly at 70 °C ± 30 °C. The adhesive may for example dissolve at or near an atmospheric pressure and/or at an increased pressure, such as at a pressure between 500 hPa and 4000 hPa, in some examples between 900 hPa and 3500 hPa, or particularly between 1000 hPa and 3000 hPa.

The adhesive may for example be or comprise an acrylate-based adhesive. Additionally or alternatively, the adhesive may for example be or comprise an acrylate-based adhesive or acrylate-containing adhesive, such as PMA or MMA.

The electrolytic solution may for example comprise a carbonate-based solvent, such as DMC, EC or EMC.

In some examples, some or all of said adhesive may be arranged in a plurality of spots and/or lines. Put differently, the adhesive may not be applied uniformly between some or all of the electrodes and the corresponding portions of the separator sheet, but may be applied selectively in said plurality of spots (e.g. dots) and/or lines. The spots and/or lines may be separated from each other by portions or regions in which no adhesive is arranged. The spots and/or lines may be arranged in a regular pattern, e.g. in a regular grid (for example an equidistant and/or rectangular grid).

For some or all of the first and second electrodes, the adhesive may for example be arranged in between 2 and 50 lines, in some examples between 5 and 20 lines between a surface of the respective electrode and the separator sheet (e.g. a portion of the separator sheet that said electrode is arranged on or covered with). Additionally or alternatively, the adhesive may for example be arranged in between 2 and 1000 spots, in some examples between 10 and 200 spots between a surface of the respective electrode and the separator sheet (e.g. a portion of the separator sheet that said electrode is arranged on or covered with).

For some or all of the first and second electrodes, the adhesive may for example cover between 0.01% and 50%, particularly between 0.05% and 30%, or more particularly between 0.08% and 1% of a cross-sectional area of a contact surface between the respective electrode and the separator sheet (e.g. a portion of the separator sheet that said electrode is arranged on or covered with). Alternatively or additionally, the adhesive may for example occupy between 0.01% and 50%, particularly between 0.05% and 30%, or more particularly between 0.08% and 1% of a total area of the respective (adjacent) electrode.

At least some of said adhesive, in some examples all of said adhesive, may have been arranged between the separator sheet and the first and/or second electrodes by applying the adhesive to a surface of the respective electrode prior to arranging said surface on the separator sheet and/or covering said surface with the separator sheet (e.g. prior to establishing contact between said electrode and the separator sheet). This may for example manifest in a lower degree of penetration of the adhesive into the separator sheet (e.g. a smaller amount of adhesive penetrating into the separator sheet and/or the adhesive penetrating to a smaller depth into the separator sheet). For example, the adhesive may entirely or primarily be present on an (outer) surface of the separator sheet that is in contact with the respective electrode. This may improve an adhesive strength between the separator sheet and the respective electrodes.

In some examples, some or all of said adhesive was arranged between the separator sheet and the first and/or second electrodes by applying the adhesive to a respective first portion of the separator sheet prior to arranging a first surface of the respective electrode on said first portion of the separator sheet and applying the adhesive to a second surface of the respective electrode opposite to the first surface prior to covering said second surface of the respective electrode with a respective second portion of separator sheet. In other words, the adhesive between a given electrode and a respective first portion of the separator sheet on one side of the electrode may have been applied to the separator sheet (resulting in a higher degree of penetration into the separator sheet), whereas the adhesive between the electrode and a respective second portion of the separator sheet on the opposite side of the electrode may have been applied to the electrode (resulting in a lower degree of penetration into the separator sheet).

In some examples, the electrode assembly may be obtainable (e.g. manufactured) by a method of manufacturing an electrode assembly for use in a battery according to any one of the examples described herein.

The present disclosure further provides a battery cell comprising an electrode assembly according to any one of the examples described herein and a battery case housing the electrode assembly together with an electrolytic solution. In some examples, the adhesive may have been dissolved in the electrolytic solution at least in part or entirely. Some or all of the dissolved adhesive may remain in the electrolytic solution. In the electrode assembly, traces (e.g. non-dissolved leftovers) of the adhesive or at least traces (e.g. indications) of the application of the adhesive may remain between the separator sheet and the first and/or second electrodes (for example modifications to a surface of the separator sheet).

### ADVANTAGEOUS EFFECTS

According to examples, the present disclosure provides an electrode assembly and a battery cell in which electrodes and a separator sheet are stacked in a Z-folding type, and an adhesive is (or has previously been) applied to the upper portion and lower portion of the electrodes, thereby preventing the electrodes from being offset or displaced from a target position. According to examples, the present disclosure further provides an apparatus for manufacturing the same and a method for manufacturing the same.

The effects of the present disclosure are not limited to the effects mentioned above and additional other effects not described above will be clearly understood from the description of the appended claims by those skilled in the art.

### BRIEF DESCRIPTION OF THE DRAWINGS

Fig. 1 is a flowchart of a method for manufacturing an electrode assembly for use in a battery according to an example of the present disclosure;
Fig. 2 is a schematic perspective partial view of an apparatus for manufacturing an electrode assembly for use in a battery during operation according to an example of the present disclosure;
Fig. 3 is a schematic diagram of an apparatus for manufacturing an electrode assembly for use in a battery according to an example of the present disclosure, which shows a state in which an adhesive is applied to a first region of a separator sheet while a table moves linearly;
Fig. 4 is a schematic diagram of an apparatus for manufacturing an electrode assembly for use in a battery according to an example of the present disclosure, which shows a state in which a first electrode is seated on a first region of a separator sheet;
Fig. 5 is a schematic diagram of an apparatus for manufacturing an electrode assembly for use in a battery according to an example of the present disclosure, which shows a state in which an adhesive is applied to an upper portion of a first electrode while a table linearly moves;
Fig. 6 is a schematic diagram of an apparatus for manufacturing an electrode assembly for use in a battery according to an example of the present disclosure, which shows a state in which an adhesive is applied to a second region of a separator sheet while a table linearly moves;
Fig. 7 is a schematic diagram of an apparatus for manufacturing an electrode assembly for use in a battery according to an example of the present disclosure, which shows a state in which a second electrode is seated on a second region of a separator sheet;
Fig. 8 is a schematic diagram of an apparatus for manufacturing an electrode assembly for use in a battery according to an example of the present disclosure, which shows a state in which an adhesive is applied to a first region of a separator sheet while a first upper nozzle linearly moves;
Fig. 9 is a schematic diagram of an apparatus for manufacturing an electrode assembly for use in a battery according to an example of the present disclosure, which shows a state in which a first electrode is seated on a first region of a separator sheet;
Fig. 10 is a schematic diagram of an apparatus for manufacturing an electrode assembly for use in a battery according to an example of the present disclosure, which shows a state in which an adhesive is applied to an upper portion of a first electrode while a first upper nozzle linearly moves;
Fig. 11 is a schematic diagram of an apparatus for manufacturing an electrode assembly for use in a battery according to an example of the present disclosure, which shows a state in which an adhesive has been applied to a second region of the separator sheet while the second upper nozzle linearly moves, and the second electrode is seated on the second region of the separator sheet;
Fig. 12 is a cross-sectional view of an electrode assembly according to an example of the present disclosure; and
Fig. 13 is an exploded perspective view of a battery cell according to an example of the present disclosure.

### DETAILED DESCRIPTION OF THE EXAMPLES

Hereinafter, various examples of the present disclosure will be described in detail with reference to the accompanying drawings so that those skilled in the art can easily carry out them. The present disclosure may be modified in various different ways, and is not limited to the examples set forth herein.

Portions that are irrelevant to the description may be omitted to clearly describe the present disclosure, and like reference numerals may designate like elements throughout the description.

Further, in the drawings, the size and thickness of each element may be arbitrarily illustrated for convenience of description, and the present disclosure is not necessarily limited to those illustrated in the drawings. In the drawings, the thickness of layers, regions, etc. may be exaggerated for clarity. In the drawings, for convenience of description, the thicknesses of some layers and regions may be exaggerated.

Further, throughout the description, when a portion is referred to as "including" or "comprising" a certain component, it means that the portion can further include other components, without excluding the other components, unless otherwise stated.

Hereinafter, a method of manufacturing an electrode assembly for use in a battery, namely a method for manufacturing a battery cell comprising said electrode assembly, according to examples of the present disclosure will be described.

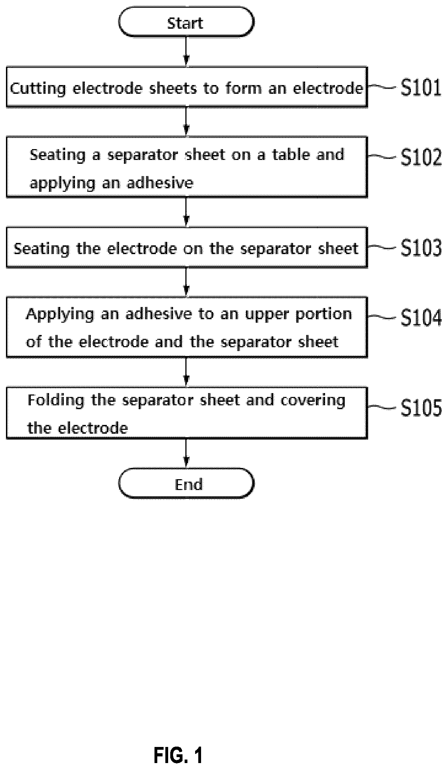

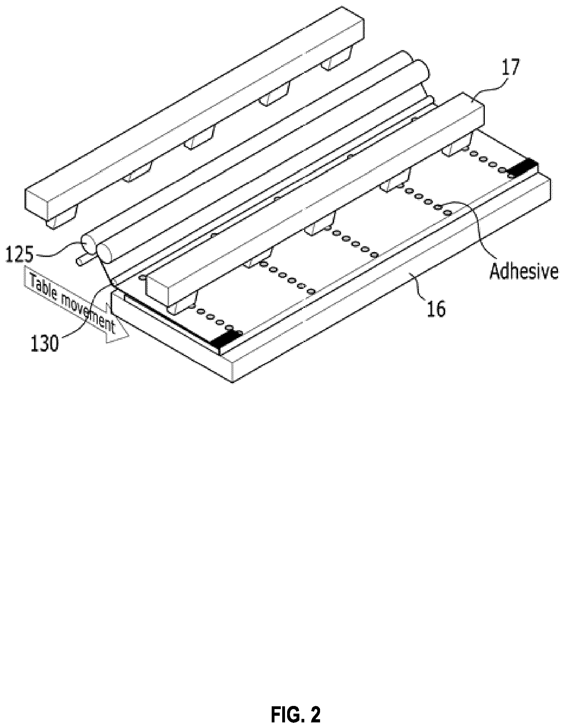

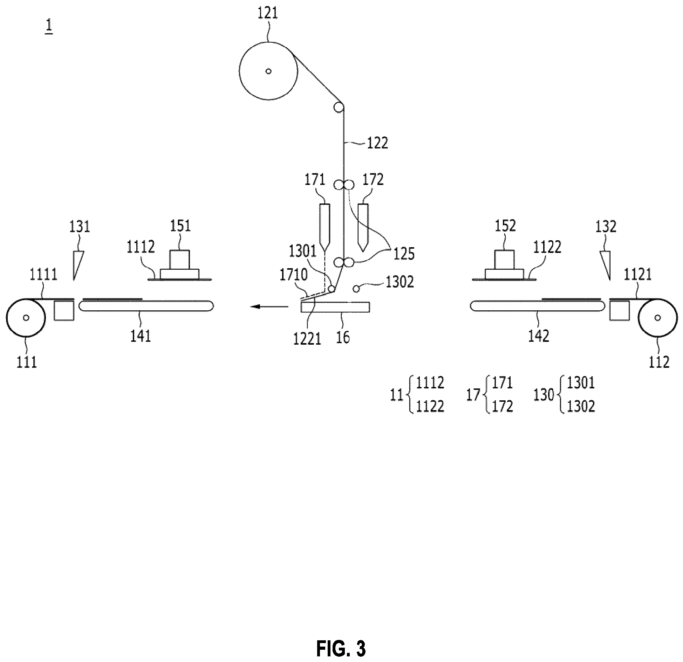

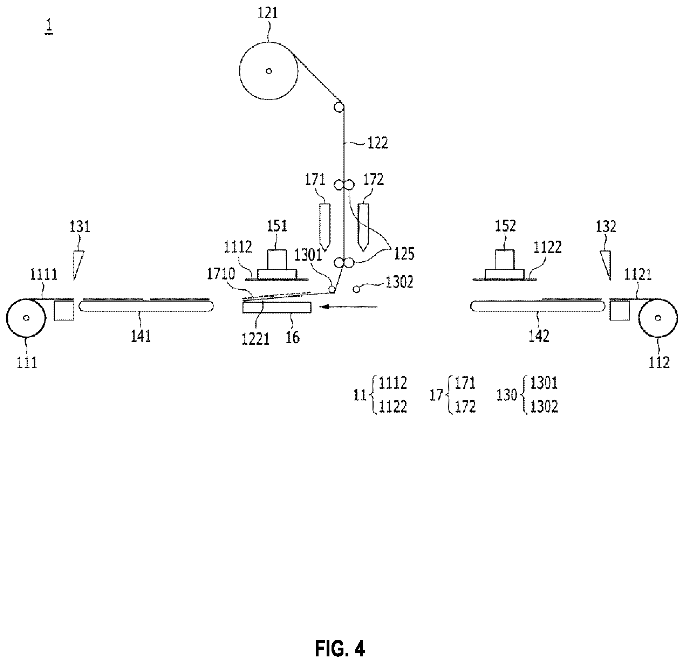

Fig. 1 is a flowchart of a method of manufacturing an electrode assembly for use in a battery, namely a method for manufacturing a battery cell comprising said electrode assembly, according to an example of the present disclosure. Fig. 2 schematically shows a part of an example of an apparatus as disclosed herein. In particular, the example shown in FIG. 2 may correspond to a part of the apparatus according to any of the examples as shown in FIG. 3 to 13 and/or described hereinafter. Fig. 3 is a schematic diagram of an apparatus 1 for manufacturing an electrode assembly for use in a battery according to an example of the present disclosure, which shows a state in which an adhesive is applied to a first region (e.g. a first portion) of a separator sheet while a table moves linearly. Fig. 4 is a schematic diagram of the apparatus 1 for manufacturing an electrode assembly for use in a battery according to an example of the present disclosure, which shows a state in which a first electrode is arranged (e.g. seated) on a first region (e.g. a first portion) of a separator sheet. Such an apparatus may for example be used for executing the method of Fig. 1 and is therefore used as a non-limiting example for illustration purposes in the following.

As shown in the partial view of an apparatus in Fig. 2, a table 16 is provided which may be configured such that an electrode 11 and/or a separator sheet 122 are seated on an upper surface of the table 16. To fix the electrode 11 and/or the separator sheet 122 on the upper surface of the table 16, the apparatus may be provided with a fixing mechanism that is illustrated as black blocks (without labelling) in Fig. 2. The fixing mechanism may, for example, comprise a clip, a clamp, a magnet or any other suitable means to mechanically fix the electrode 11 and/or the separator sheet 122 on the upper surface of the table 16.

The example of the apparatus in Fig. 2 further comprises a separator guide 125 configured to guide the electrode 11 and/or the separator sheet 122 towards the table 16, particularly in a folding direction. The apparatus further comprises one or more nozzles 17 arranged above the table 16. For example, a pair of nozzles may be provided so as to be arranged one on each side of a separator guide 125. The nozzles 17 are each configured to deposit an adhesive on the electrode 11 and/or the separator sheet 122 seated on the table 16. A layer formed by the adhesive deposited on the electrode 11 and/or the separator sheet 122 may be referred to as an adhesive layer.

The example shown in Fig. 2 may be considered as a part of the apparatus 1 as described below. Hence, same terminology and same reference signs may be used wherever appropriate to indicate same or like features. Any of the features described below may be implemented with or in the example shown in Fig. 2.

The apparatus 1 of Figs. 3 and 4 comprises an electrode supply unit, which in turn comprises a first electrode supply unit and a second electrode supply unit. In this example, the first electrode supply unit is (e.g. consists or is made up of) or comprises a first electrode reel 111, a first transfer device 141 and a first electrode placement device, namely a head (or header) 151. The second electrode supply unit is (e.g. consists or is made up of) or comprises a second electrode reel 111, a second transfer device 141 and a second electrode placement device, namely a head (or header) 151.

The apparatus 1 further comprises a separator supply unit, which in this example is or comprises a separator reel 121. The apparatus 1 also comprises a stacking table 16 (also referred to simply as table) and a separator guide 125. The apparatus 1 further comprises first and second adhesive applicators, which in this example each are or comprise a nozzle 171, 172 (also referred to as upper nozzles 171, 172 and collectively forming a pair of upper nozzles 17). The apparatus 1 also comprises first and second deflectors, which in this example each are or comprise a deflecting roller (or roll), namely a pressure roller 1301, 1302 (collectively forming a pair of pressure rollers).

The apparatus 1 is configured for stacking first electrodes 1112 and second electrodes 1122 on the table 16 with a separator sheet 122 folded therebetween. The first and second electrodes 1112, 1122 may collectively be referred to as electrode(s) 11. Portions of the separator sheet 122 on which first electrodes 1112 are arranged (e.g. first, third, ... portions of the separator sheet 122) may collectively be referred to as first region 1221. Portions of the separator sheet 122 on which second electrodes 1122 are arranged (e.g. second, fourth, ... portions of the separator sheet 122) may collectively be referred to as second region 1222.

Referring to Figs. 1, 2 and 3, a method for manufacturing a battery cell comprising an electrode assembly according to an example of the present disclosure includes a step of shaping (e.g. cutting) electrode sheets 1111 and 1121 to form an electrode 11 (e.g. a first electrode 1112 and/or a second electrode 1122) (S101); a step of arranging (e.g. seating) a separator sheet 122 (e.g. a first portion and/or a second portion thereof) on a table 16 and applying an adhesive to the separator sheet 122 (e.g. to the first and/or second portions) (S102); a step of arranging (e.g. seating) the electrode 11 (e.g. the first electrode 1112 and/or the second electrode 1122) on the separator sheet 122 (e.g. on said first and second portion, respectively, thereof) (S103); a step of applying an adhesive to an upper portion (e.g. a first or top surface) of the electrode 11 (e.g. the first electrode 1112 and/or the second electrode 1122) and the separator sheet 122 (e.g. to the second portion and/or a third portion thereof) (S104); and a step of folding the separator sheet 112 and covering the electrode 11 (e.g. the first electrode 1112 and/or the second electrode 1122), for example with said second and third portion, respectively, of the separator sheet) (S105).

Therefore, the method for manufacturing a battery cell comprising an electrode assembly according to the present example applies an adhesive to the upper portion (e.g. a first or top surface) and lower portion (e.g. a second or bottom surface opposite to the first surface) of the electrode 11 (e.g. the first electrode 1112 and/or a second electrode 1122) when stacking the electrode 11 and the separator sheet 122 in a Z-folding type, whereby the electrode 11 (e.g. the first electrode 1112 and/or a second electrode 1122) can be prevented from being offset or displaced from a target position (fixed position).

Hereinafter, each step shown in the flowchart of Fig. 1 will be specifically described with reference to Figs. 3 to 7 as a non-limiting example for illustration purposes.

The battery cell manufacturing apparatus 1 according to an example of the present disclosure includes electrode reels 111 and 112 on which an electrode sheet (e.g. having a plurality of electrodes 11 formed thereon or to be formed thereof) is unwound; a separator reel 121 in which a separator sheet 122 that is folded when the electrodes 11 are seated, covers the electrodes 11 and is stacked with the electrodes 11 is unwound; a table 16 on which the electrode 11 and the separator sheet 122 are seated on the upper surface; a separator guide 125 that guides a folding direction of the separator sheet 122; a pair of upper nozzles 17 that apply an adhesive to at least a part of the separator sheet 122 or the electrode 11 seated on the table 16; and a pair of pressure rollers 130 that press the separator sheet 122 (e.g. press against the separator sheet 122) guided from the separator guide 125.

The electrode reels 111 and 112 may include a first electrode reel 111 on which a first electrode sheet 1111 (e.g. having a plurality of first electrodes 1112 formed thereon or to be formed thereof) is unwound; and a second electrode reel 112 on which the second electrode sheet 1121 (e.g. having a plurality of second electrodes 1122 formed thereon or to be formed thereof) is unwound.

The electrode reels 111 and 112 are reels on which the electrode sheets 1111 and 1121 are wound, and the electrode sheets 1111 and 1121 are unwound from the electrode reels 111 and 112.

Then, the electrode sheets 1111 and 1121 are cut to form the electrodes 11. More specifically, according to the present example, the first electrode reel 111 is a reel on which the first electrode sheet 1111 is wound, and the first electrode sheet 1111 is unwound from the first electrode reel 111. Further, the second electrode reel 112 is a reel on which the second electrode sheet 1121 is wound, and the second electrode sheet 1121 is unwound from the second electrode reel 112.

Here, the electrode sheets 1111 and 1121 can be manufactured by applying a slurry of an electrode active material, a conductive material, and a binder onto an electrode current collector, and then drying and pressing the slurry. However, the method for manufacturing the electrode sheets 1111 and 1121 is not limited thereto, and any suitable method for manufacturing the electrode sheets 1111 and 1121 and/or the electrodes 1112, 1122 known in the art can be used for manufacturing the electrode sheets 1111, 1121 and the electrodes 1112, 1122, respectively.

More specifically, the first electrode sheet 1111 and the second electrode sheet 1121 may include electrode active materials having different polarities from each other. That is, the first electrode 1112 and the second electrode 1122 may be electrodes 11 having different polarities from each other. As an example, if the first electrode 1112 is a cathode, the second electrode 1122 may be an anode. As another example, if the first electrode 1112 is an anode, the second electrode 1122 may be a cathode.

The separator reel 121 is a reel on which the separator sheet 122 is wound, and the separator sheet 122 is unwound from the separator reel 121. After that, the separator sheet 122 is stacked with the electrodes 11 formed by cutting the electrode sheets 1111 and 1121. Here, the electrode 11 and the separator sheet 122 are stacked in a Z-folding type. More specifically, in the present example, when the first electrode 1112 is seated on the separator sheet 122, one side is folded to cover the first electrode 1112, and when the second electrode 1122 is seated, the other side is folded to cover the second electrode 1122. The separator sheet 122 may thus assume or take a zigzag or meandering shape.

The table 16 may be configured such that the electrode 11 and the separator sheet 122 can be seated and stacked on the upper surface. More preferably, the upper surface of the table 16 is formed substantially flat, so that the electrode 11 and the separator sheet 122 can be stably stacked.

The table 16 may be arranged between the first and second electrode supply units, in particular between the first electrode reel 111 and the second electrode reel 112. More specifically, the table 16 may be movable between the first and second electrode reels 111, 112, for example back and forth along a first direction (e.g. along a horizontal direction in Fig. 3). The table 16 may for example linearly reciprocate toward the first electrode reel 111 and the second electrode reel 112.

Thereby, the table 16 may linearly reciprocate between the first electrode reel 111 and the second electrode reel 112, so that the folding operation of the separator sheet 122 of the separator guide 125 can be assisted while the electrode 11 can be stacked more quickly on the table 16. In this regard, the process speed and efficiency can be further improved.

The battery cell manufacturing apparatus 1 according to the present example may further include a first transfer device 141 that transfers the first electrode 1112 toward the table 16; and a second transfer device 142 that transfers the second electrode 1122 towards the table 16. Here, the first transfer device 141 may transfer the first electrode 1112, which is formed by cutting the first electrode sheet 1111 unwound from the first electrode reel 111, toward the table 16. Further, the second transfer device 142 may transfer the second electrode 1122, which is formed by cutting the second electrode sheet 1121 unwound from the second electrode reel 112, toward the table 16.

Thereby, in the present example, the first electrode 1112 and the second electrode 1122 can be respectively transferred to both sides of the table 16 through the first transfer device 141 and the second transfer device 142, which may make it easy to alternately stack the first electrode 1112 and the second electrode 1122 on the separator sheet 122.

Referring to Figs. 2, 3 and 4, the battery cell manufacturing apparatus 1 according to the present example may include heads (or headers) 151 and 152 that adsorb the electrode 11 and seat it on the separator sheet 122. More specifically, the heads 151 and 152 may further include a first head (or header) 151 that adsorbs the first electrode 1112 and seats it on the separator sheet 122, and a second head (or header) 152 that adsorbs the second electrode 1122 and seats it on the separator sheet 122. Here, the first head 151 and the second head 152 each can move toward the table 16, for example move back and forth along the first direction (e.g. linearly reciprocate) toward the table 16. The heads 151, 152 may be examples of an electrode placement device, in particular an electrode placement head according to the present disclosure.

More specifically, the first head 151 may pick up and hold (e.g. adsorb and/or grab) the first electrode 1112 transferred from the first transfer device 141 toward the table 16, and the second head 152 may pick up and hold (e.g. adsorb and/or grab) the second electrode 1122 transferred from the second transfer device 142 toward the table 16. Further, the first head 151 and the second head 152 may linearly move toward the table 16.

Thereby, in the present example, the first head 151 and the second head 152 can move the electrode 11 upward of the table 16 (e.g. facing the table 16), and can stably seat the electrode 11 on the separator sheet 122.

Further, the heads 151 and 152 may measure whether or not the first electrode 1112 or the second electrode 1122 is misaligned for each of first electrode 1112 or second electrode 1122, and may then correct the position as necessary, thereby being able to precisely seat at a desired position (target position) on the separator sheet 122 located on the table 16. Thereby, in the present example, the alignment degree between the electrode 11 and the separator sheet 122 stacked on the table 16 may be further improved.

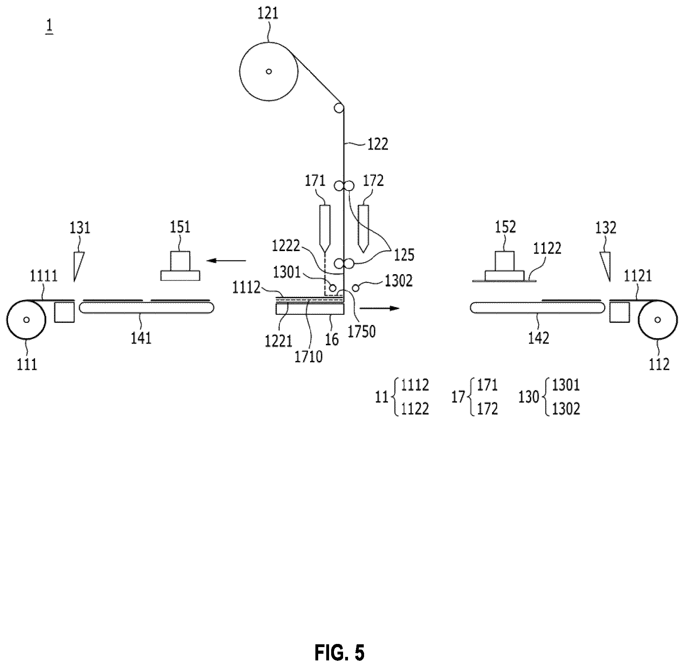

A pair of upper nozzles 17 may apply an adhesive to at least a part of the upper portion of the electrode 11, e.g. as shown in Fig. 5. More specifically, the pair of upper nozzles 17 include a first upper nozzle 171 that applies an adhesive to at least a part of an upper portion (e.g. a first or top surface) of the first electrode 1112 and a second upper nozzle 172 that applies an adhesive to at least a part of an upper portion (e.g. a first or top surface) of the second electrode 1122.

Referring to Fig. 3, the first upper nozzle 171 may apply an adhesive to the first region 1221 (e.g. a first portion) of the separator sheet 122 seated on the table 16 to form a first adhesive layer 1710 as shown in Fig. 3 (e.g. on a surface of the separator sheet 122 that the first electrode 1112 is to be arranged on). More specifically, as the table 16 linearly moves toward the first transfer device 141 as shown in Fig. 3, the adhesive applied from the first upper nozzle 171 may form a first adhesive layer 1710 in the first region 1221 (e.g. on the first portion) of the separator sheet 122. After that, the first electrode 1112 may be seated on the first region 1221 (e.g. on the first portion) of the separator sheet 122 on which the first adhesive layer 1710 is formed as illustrated in Fig. 4.

Here, the first region 1221 of the separator sheet 122 refers to a region in the separator sheet 122 to which the first electrode 1112 is attached. In some cases, the first region 1221 refers to a region in the separator sheet 122 to which the first electrode 1112 is attached while covering the second electrode 1122 (e.g. the first region 1221 or the first portion thereof may be arranged above a respective second electrode 1122 and below a respective first electrode 1112 in the final electrode assembly). Further, the second region 1222 refers to a region in the separator sheet 122 to which the second electrode 1122 is attached while covering the first electrode 1112 (e.g. the second region 1221 or the second portion thereof may be arranged above a respective first electrode 1112 and below a respective second electrode 1112 in the final electrode assembly). In other words, the first electrode 1112 is seated on the first region 1221 (e.g. on the first portion) of the separator sheet 122, and the second electrode 1122 may be seated on the second region 1222 (e.g. on the second portion) of the separator sheet 122.

The adhesive may be uniformly applied to the first region 1221 of the separator sheet 122. However, when the adhesive is completely applied to the entire surface of the first region 1221 of the separator sheet 122, the amount of the adhesive applied may be excessively large. In such a case, the adhesive may flow to the outside of the separator sheet 122 to contaminate other portions, and when the secondary battery is manufactured, the function of generating power may not be smooth.

Therefore, in the present example, it may be preferable that the adhesive is applied to the first region 1221 of the separator sheet 122 selectively (e.g. locally only), e.g. by a spot application method of applying in a spot (e.g. as a plurality of spots) and/or a line application method of applying in a line (e.g. as a plurality of lines). That is, the first adhesive layer 1710 may be preferably formed in a spot pattern and/or a line pattern.

If, in contrast, the amount of the adhesive applied is too small, the electrode 11 may not be or remain fixed to the separator sheet 122 while the cell moves, and can be offset or displaced from a target position. Therefore, it may be preferable that the interval between the regions to which the adhesive is applied is not excessively wide.

The adhesive contained in the adhesive layer 1710 located between the first region 1221 of the separator sheet 122 and the first electrode 1112 may be dissolved in an electrolytic solution, in particular the electrolytic solution that the electrode assembly is housed with in the battery cell. More specifically, when the first adhesive layer 1710 is impregnated with an electrolytic solution, the adhesive contained in the first adhesive layer 1710 may be dissolved in the electrolytic solution. Here, the adhesive being dissolved may mean that the adhesive is dissolved into the electrolytic solution. That is, it may mean that the region of the first adhesive layer 1710 is reduced (e.g. dissolved partially), or the first adhesive layer 1710 is completely eliminated (or dissolved), so that the first adhesive layer 1710 does not remain in the first region 1221 of the separator sheet 122.

In one example, the adhesive may be an acrylate-based adhesive. That is, in the present example, as the acrylate-based adhesive is applied as the adhesive to the first region 1221 of the separator sheet 122, the adhesive may be dissolved into the electrolytic solution contained in the final battery cell.

Thereby, in the present example, the first adhesive layer 1710 can fix the first electrode 1112 to the first region 1221 of the separator sheet 122 in the manufacturing process to prevent the separation from a fixed position. In addition, the first adhesive layer 1710 may be dissolved in the electrolytic solution contained in the final battery cell, and thus may not hinder the movement of lithium ions between the electrode and the separator, and can further improve the battery cell performance.

Referring to Figs. 2, 3 and 4, the battery cell manufacturing apparatus 1 according to the present example may include a pair of deflectors 130 configured to deflect the separator sheet between the separator guide 125 and the table 16, namely a pair of pressure rollers 130 that press the separator sheet 122 guided from the separator guide 125. More specifically, the pair of pressure rollers 130 may be located between the table 16 and the separator guide 125. Here, the pair of pressure rollers 130 may be fixed (i.e. not movable).

In one example, the pair of pressure rollers 130 may have a shape in which a pair of rolls are horizontally arranged (e.g. at a same height above the table 16). The pair of pressure rollers 130 may be spaced apart along the (horizontal) first direction as illustrated in Fig. 3. The pressure roller 130 may press one surface of the separator sheet 122. However, the shape of the pressure roller 130 is not limited thereto, and can be different than in the present example, e.g. as long as it is a shape capable of pressing one surface of the separator sheet 122.

Thereby, at least one of the pair of pressure rollers 130 may press one surface of the separator sheet 122, e.g. to constantly control the tension, the orientation and/or the position of the separator sheet 122, as shown in Figs. 2, 3 and 4. Thereby, the pair of pressure roller 130 may allow for maintaining an orientation and/or a distance of the separator sheet 122 relative to the upper nozzles 171, 172 while the table 16 is moving relative to the separator guide 125 as illustrated in Figs. 2, 3 and 4 (e.g. while applying adhesive from the upper nozzles 171, 172).

In particular, the pair of pressure rollers 130 may be located between the first upper nozzle 171 and the second upper nozzle 172 (e.g. along the first direction). More specifically, the pair of pressure rollers 130 may include a first pressure roller 1301 and a second pressure roller 1302. Here, the first pressure roller 1301 is located between the first upper nozzle 171 and the separator guide 125 (e.g. along the first direction), and the second pressure roller 1302 may be located between the second upper nozzle 172 and the separator guide 125 (e.g. along the first direction). That is, the first upper nozzle 171 and the second upper nozzle 172 may apply an adhesive onto the separator sheet 122 pressed by at least one of the pair of pressure rollers 130 (e.g. may apply adhesive onto the separator sheet 122 while it is in contact with and deflected by one of the pair of pressure rollers 130).

In one example, the first pressure roller 1301 can press one surface of the separator sheet 122 (e.g. the one that the first electrode 1112 is to be arranged on) in the process of applying the adhesive from the first upper nozzle 171 to the first region 1221 (e.g. to said surface) of the separator sheet 122, as shown in Fig. 3. Thereby, the first pressure roller 1301 can keep a constant height difference (distance) between the first region 1221 of the separator sheet 122 and the first upper nozzle 171, and an application amount or an application thickness of the first adhesive layer 1710 may be relatively uniform. This can also be similar in the case of the second pressure roller 1302.

Further, in a state where the separator sheet 122 is pressed by the first pressure roller 1301, the first upper nozzle 171 can adjust the height and/or angle between the first region 1221 of the separator sheet 122 and the first upper nozzle 171. In one example, on the basis of (e.g. relative to) the first region 1221 of the separator sheet 122, the first upper nozzle 171 can move so that the height difference between the first region 1221 of the separator sheet 122 and the first upper nozzle 171 becomes constant, and/or can rotate so that the angle between the first region 1221 of the separator sheet 122 and the first upper nozzle 171 become constant.

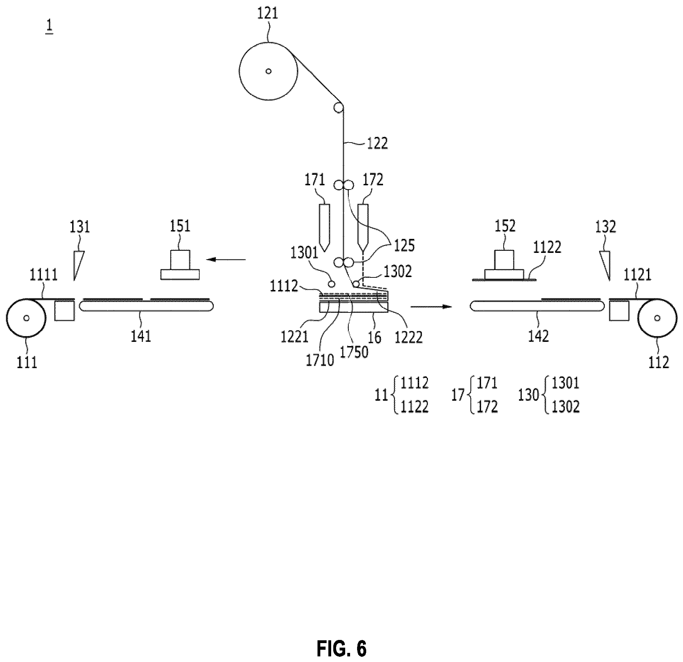

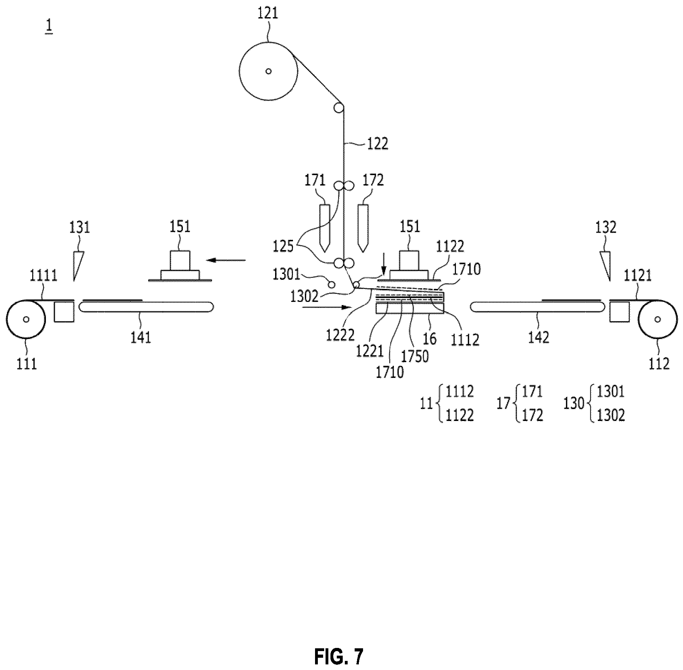

Thereby, in a state in which the separator sheet 122 is pressed by the first pressure roller 1301, the height difference and/or angle between the first upper nozzle 171 and the first region 1221 of the separator sheet 122 can be kept the same, whereby the application reliability of the adhesive applied from the first upper nozzle 171 to the first region 1221 of the separator sheet 122 can be further improved. In a similar way, the second upper nozzle 172 may apply the adhesive to the second region 1222 of the separator sheet 122, in a state in which the separator sheet 122 is pressed by the second pressure roller 1302 (e.g. in contact with and deflected by the second pressure roller 1302), as shown in Figs. 6 and 7.

Fig. 5 is a schematic diagram of the apparatus 1 for manufacturing an electrode assembly for use in a battery according to an example of the present disclosure, which shows a state in which an adhesive is applied to an upper portion (e.g. a first or top surface) of a first electrode while a table linearly moves. Fig. 6 is a schematic diagram of the apparatus 1 for manufacturing an electrode assembly for use in a battery according to an example of the present disclosure, which shows a state in which an adhesive is applied to a second region (e.g. a second portion) of a separator sheet (e.g. on a surface that a second electrode is to be arranged on) while a table linearly moves.

Referring to Figs. 2 to 6, the first upper nozzle 171 and the second upper nozzle 172 may be arranged on both sides (opposite sides) with the separator sheet 122 being interposed therebetween.

That is, the first upper nozzle 171 may apply an adhesive to at least a part of the upper portion (e.g. the first or top surface) of the first electrode 1112 to form the second adhesive layer 1750, before the second region 1222 (e.g. the second portion) of the separator sheet 122 covers the upper portion of the first electrode 1112, similarly to those shown in Fig. 5 and/or while the upper portion of the first electrode 1112 is being covered with the second region 1222 (e.g. the second portion) of the separator sheet 122. Further, the second upper nozzle 172 can apply an adhesive to at least a part of the second region 1222 (e.g. the second portion) of the separator sheet 122 (e.g. on a surface thereof that the second electrode 1122 is to be arranged on) to form a first adhesive layer 1710, after the second region 1222 of the separator sheet 122 covers the upper portion of the first electrode 1112 and/or while the second region 1222 is being arranged on the upper portion of the first electrode 1112, similarly to those shown in Fig. 6.

In a similar way, the second upper nozzle 172 can apply an adhesive to at least a part of the upper portion (e.g. a first or top surface) of the second electrode 1122 to form the second adhesive layer 1750, before the first region 1221 (e.g. a third portion) of the separator sheet 122 covers the upper portion of the second electrode 1122 and/or while the upper portion of the second electrode 1122 is being covered with the first region 1221 (e.g. the third portion) of the separator sheet 122. Further, the first upper nozzle 171 can apply an adhesive to at least a part of the first region 1221 (e.g. the third portion) of the separator sheet 122 to form a first adhesive layer 1710, after the first region 1221 (e.g. the third portion) of the separator sheet 122 covers the upper portion of the second electrode 1122 and/or while the first region 1221 (e.g. the third portion) is being arranged on the upper portion of the second electrode 1122.

Here, the table 16 may linearly reciprocate left and right on the basis of (relative to) the pair of upper nozzles 17. That is, the pair of upper nozzles 17can apply an adhesive to at least a part of the upper portion of the electrode 11 or the separator sheet 122, while the table 16 is moving linearly in the direction toward the first transfer device 141 or the second transfer device 142 with respect to the pair of upper nozzles 17.

Additionally, the details of the application of the adhesive by the pair of upper nozzles 17 and the second adhesive layer 1750 may be similar to the first adhesive layer 1710 described above. Here, the first adhesive layer 1710 is formed by applying an adhesive between the lower portion of the electrode 11 and the separator sheet 122, and the second adhesive layer 1750 may be formed by applying an adhesive between the upper portion of the electrode 11 and the separator sheet 122.

Further, as shown in Figs. 5 and 6, before the second region 1222 (e.g. the second portion) of the separator sheet 122 covers the upper portion of the first electrode 1112, the first upper nozzle 171 can apply an adhesive to at least a part of the upper portion of the first electrode 1112 to form a second adhesive layer 1750. At the same time, the second upper nozzle 172 can apply an adhesive to at least a part of the second region 1222 (e.g. the second portion) of the separator sheet 122 to form another first adhesive layer 1710 (e.g. on a surface thereof facing away from the first electrode 1112, i.e. on which the second electrode 1122 is to be arranged). Furthermore, before the first region 1221 (e.g. the third portion) of the separator sheet 122 covers the upper portion of the second electrode 1122, the second upper nozzle 172 can apply an adhesive to at least a part of the upper portion of the second electrode 1122 to form another second adhesive layer 1750. At the same time, the first upper nozzle 171 can apply an adhesive to at least a part of the first region 1221 (e.g. the third portion) of the separator sheet 122 to form another first adhesive layer 1710.

Thereby, in the present example, the pair of upper nozzles 17 may simultaneously apply an adhesive onto the upper portion of the separator sheet 122 and/or the electrode 11, whereby the process time of the adhesive application process can be reduced, and the process efficiency can be further improved.

Further, as shown in Fig. 5, the pair of pressure rollers 130 may be spaced apart from the second adhesive layer 1750 formed on the upper portion of the first electrode 1112 (e.g. spaced apart from the table 16 and the electrode stack or assembly formed thereon, for example along a second (vertical) direction). Thereby, when the table 16 is linearly moved, it is possible to prevent the adhesive applied to the second adhesive layer 1750 formed on the first electrode 1112 from directly contacting the pair of pressure rollers 130.

Further, as shown in Fig. 6, the second pressure roller 1302 can press the first adhesive layer 1710 and/or the second adhesive layer 1750 between the second region 1222 (e.g. the second portion) of the separator sheet 122 and the first electrode 1112, e.g. in a direction opposite to the moving direction of the table 16, while pressing one surface of the separator sheet 122. For example, the second pressure roller 1302 may reduce an angle between the second region 1222 of the separator sheet 122 and the table 16 (e.g. the first electrode 1112 arranged thereon) and/or may apply or generate extra tension in the separator sheet 122. Thereby, the first adhesive layer 1710 and/or the second adhesive layer 1750 formed between the first electrode 1112 and the second region 1222 of the separator sheet 122 can be more uniformly applied. This may similar when the first pressure roller 1301 presses the first region 1221 (e.g. the third portion) of the separator sheet 122 covering the second electrode 1122 on which the first adhesive layer 1710 is formed.

Fig. 7 is a schematic diagram of the apparatus 1 for manufacturing an electrode assembly for use in a battery according to an example of the present disclosure, which shows a state in which a second electrode is seated on a second region (e.g. a second portion) of a separator sheet.

Referring to Figs. 6 and 7, in the present example, the separator sheet 122 can guide a folding direction by the separator guide 125. Here, the pair of pressure rollers 130 can assist in guiding the folding direction of the separator sheet 122 by the separator guide 125.

In one example, the separator guide 125 may have a shape in which a pair of (guiding) rollers (or rolls) are horizontally arranged (e.g. at a same height above the table 16) In a state where the separator sheet 122 is inserted between the pair of guiding rollers and/or between the pair of pressure rollers 130, the second pressure roller 1302 can press the separator sheet 122 (e.g. be in contact with and deflect the separator sheet 122). However, the shape of the separator guide 125 is not limited thereto, and can be different than in the present example, e.g. as long as it is a shape capable of controlling the folding direction of the separator sheet 122.

Further, the separator guide 125 may be located individually at the upper and lower portions on the basis of the pair of upper nozzles 17. For example, the separator guide 125 may comprise a first pair of rollers adjacent to or below a lower or bottom portion of the pair of upper nozzles 17 (e.g. between the pair of upper nozzles 17 and the pressure rollers 1301, 1302) and a second pair of rollers adjacent to or above an upper or top portion of the pair of upper nozzles 17 as shown in Figs. 6 and 7. However, the position and number of the separator guides 125 (e.g. rollers) are not limited thereto, and can be different than in the present example, e.g. as long as it is a position and number capable of controlling the folding direction of the separator sheet 122.

Further, the separator guide 125 can be fixed together with a pair of upper nozzles 17 and a pair of pressure rollers 130 (e.g. such that the separator guide 125, the pair of upper nozzles 17 and the pair of pressure rollers 130 cannot move relative to each other). Here, the table 16 linearly reciprocates (e.g. moves along the first (horizontal) direction) toward the first transfer device 141 and the second transfer device 142 on the basis of (relative to) the separator guide 125. The separator sheet 122 guided by the separator guide 125 is folded along the moving direction of the separator guide 125, so that the separator sheet 122 can cover the electrode 11.

In one example, referring to Figs. 6 and 7, in a state where the first electrode 1112 is seated on the first region 1221 (e.g. the first portion) of the separator sheet 122, the table 16 linearly moves toward the second transfer device 142 so that the second region 1222 (e.g. the second portion) of the separator sheet 122 can cover the upper portion of the first electrode 1112.

Thereby, as the table 16 linearly reciprocates, the folding process of the separator sheet 122 by the separator guide 125 can be performed simultaneously with the adhesive application process of the pair of upper nozzles 17, so that the process time can be reduced, and the process efficiency can be further improved.

The electrode assembly manufacturing method according to an example of the present disclosure using the electrode assembly manufacturing apparatus 1 can be performed as follows (e.g. for manufacturing a unit cell for an electrode assembly).

First, referring to Figs. 1, 2 and 3, when the first electrode sheet 1111 is unwound from the first electrode reel 111, the first cutter 131 cuts the first electrode sheet 1111 to form a plurality of first electrode 1112 (S101).

Meanwhile, when the separator sheet 122 is unwound from the separator reel 121, the separator sheet 122 is arranged (e.g. seated) on the upper surface of the table 16 in a state of (while) being pressed (e.g. in contact with and deflected) by the first pressure roller 1301, and the first upper nozzle 171 applies an adhesive to the separator sheet 122 (S102). At this time, the table 16 linearly moves toward the first transfer device 141, and along with the movement of the table 16, the first upper nozzle 171 forms a first adhesive layer 1710 on the first region 1221 (e.g. the first portion) of the separator sheet 122.

Further, referring to Figs. 1 and 4, the first head 151 may linearly move on (e.g. towards) the table 16 in a state of adsorbing the first electrode 1112. And, when the first head 151 is located above the table 16, as shown in Fig. 4, the first head 151 seats the first electrode 1112 on the first region 1221 of the separator sheet 122 on which the first adhesive layer 1710 is formed (S103).

Further, referring to Figs. 1, 5 and 6, as the table 16 moves toward the second transfer device 142 after the first electrode 1112 is seated on the first region 1221 (e.g. the first portion) of the separator sheet 122, the first upper nozzle 171 applies an adhesive to the upper portion (e.g. a top surface) of the first electrode 1112 to form the second adhesive layer 1750. Further, as the table 16 moves towards the second transfer device 142 in a state where one surface of the separator sheet 122 is pressed by the second pressure roller 1302 (e.g. such that the separator sheet is in contact with and deflected by the second pressure roller 1302), the second upper nozzle 172 also applies an adhesive to the second region 1222 (e.g. a second portion) of the separator sheet 122 to form the first adhesive layer 1710 (e.g. on said surface pressed by the second pressure roller 1302) (S104).

Further, referring to Figs. 1, 6 and 7, as the table 16 moves toward the second transfer device 142 on the basis of (relative to) the separator guide 125, one side of the separator sheet 122 is folded, so that the second region 1222 (e.g. the second portion) of the separator sheet 122 covers the first electrode 1112 on which the second adhesive layer 1750 is formed (S105).

Meanwhile, as shown in Fig. 3, when the second electrode sheet 1121 is unwound from the second electrode reel 112, the second cutter 132 cuts the second electrode sheet 1121. Then, a plurality of second electrodes 1122 are formed. After that, as shown in Fig. 7, when the second transfer device 142 transfers the second electrode 1122, the second head 152 adsorbs the second electrode 1122. And, when the second region 1222 (e.g. the second portion) of the separator sheet 122 covers the first electrode 1112, the second head 152 adsorbing the second electrode 1122 moves toward the upper portion (e.g. a surface facing away from the first electrode 1112) of the second region 1222 (e.g. the second portion) to arrange (e.g. seat) the second electrode 1122 on the second region 1222 (e.g. the second portion) where the first adhesive layer 1710 is formed.

And, similarly to the first upper nozzle 171 of Fig. 5, the second upper nozzle 172 applies an adhesive onto the second electrode 1122 (e.g. a top surface thereof). Here, as the table 16 moves towards the first transfer device 141, the second upper nozzle 172 may form a second adhesive layer 1750 on the second electrode 1122.

Then, as the table 16 moves toward the first transfer device 141 on the basis of (relative to) the separator guide 125, the other side of the separator sheet 122 is folded, so that the first region 1221 (e.g. a third portion) of the separator sheet 122 covers the second electrode 1122 on which the second adhesive layer 1750 is formed.

By repeating the above processes, the electrode assembly manufacturing method according to an example of the present disclosure can be performed, e.g. to sequentially form a plurality of unit cells of the electrode assembly.

When such electrode cell manufacturing method according to the examples of the present disclosure is performed, the adhesives are respectively applied to the upper and lower portions (e.g. bottom and top surfaces) of the electrode 11 at the time of stacking the electrode 11 and the separator sheet 122 in a Z-folding type, thereby capable of preventing the electrode 11 from being offset or displaced from a target position.

Next, an electrode assembly manufacturing apparatus 1a according to another example of the present disclosure will be described. The electrode assembly manufacturing apparatus 1a of the present example can be similar to the electrode assembly manufacturing apparatus 1 described above with reference to Figs. 2 to 7. Only the parts different from the electrode assembly manufacturing apparatus 1 will be described below. The apparatus 1a may also be used for executing a method of manufacturing an electrode assembly according to the present disclosure such as for example the method of Fig. 1.

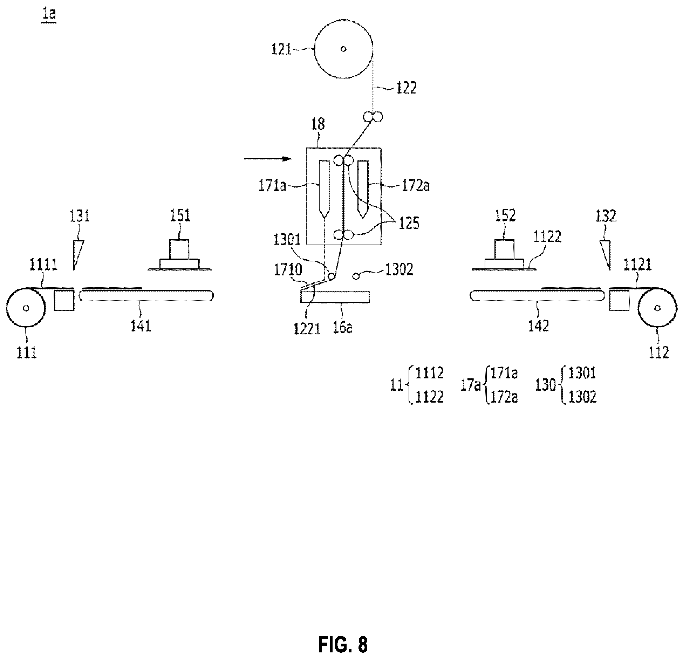

Fig. 8 is a schematic diagram of the apparatus 1a for manufacturing an electrode assembly for use in a battery according to an example of the present disclosure, which shows a state in which an adhesive is applied to a first region (e.g. a first portion) of a separator sheet while a first upper nozzle linearly moves.

Referring to Fig. 8, in the battery cell manufacturing apparatus 1a of the present example, the table 16a may be fixed (i.e. not movable). Thereby, the electrode 11 and the separator sheet 122 can be stacked on the table 16 in a fixed state, so that alignment degree of the electrode 11 and the separator sheet 122 can be further improved.

Further, the separator guide 125, the first upper nozzle 171a, and the second upper nozzle 172a may be movable between the first and second electrode reels 111, 112, for example back and forth along a first direction (e.g. along a horizontal direction in Fig. 8). The separator guide 125, the first upper nozzle 171a, and the second upper nozzle 172a may for example linearly reciprocate left and right on the basis of (relative to) the table 16a. In one example, as shown in Fig. 8, as the first upper nozzle 171a linearly moves toward the second transfer device 142 on the basis of the table 16a, the first adhesive layer 1710 may be formed by applying an adhesive to the first region 1221 (e.g. the first portion) of the separator sheet 122 .

Further, the pair of pressure rollers 130 may move together with the separator guide 125, the first upper nozzle 171a and the second upper nozzle 172a in the state of (e.g. while) pressing one surface of the separator sheet 122 (e.g. being in contact with and deflecting the separator sheet). In one example, the first pressure roller 1301 can move together with the second pressure roller 1302, the first upper nozzle 171a and the second upper nozzle 172a in the state of pressing one surface of the separator sheet 122. Thereby, the pair of pressure rollers 130 can maintain the tension, orientation and/or position of the separator sheet 122. In addition, the height difference (distance) between the first upper nozzle 171a and the second upper nozzle 172a and the separator sheet 122 may be maintained.

As an example, the battery cell manufacturing apparatus 1a according to the present example may further include a carriage such as a moving box 18 that houses the separator guide 125, the first upper nozzle 171a, and the second upper nozzle 172a. That is, in the battery cell manufacturing apparatus 1a of the present example, as the moving box 18 moves (e.g. back and forth along the first direction), the separator guide 125, the first upper nozzle 171a, and the second upper nozzle 172a can move at the same time.

Thereby, the interval (or distance) between the first upper nozzle 171a and the separator guide 125 and the interval (or distance) between the second upper nozzle 172a and the separator guide 125 can be kept constant, and the application reliability of the adhesive applied from the first upper nozzle 171a and the second upper nozzle 172a can be improved.

Further, the angle of the first upper nozzle 171a and/or the second upper nozzle 172a in the moving box 18 may be rotated (e.g. by rotating one or both of the first and second upper nozzles 171a, 172a or an end portion such as an outlet thereof), and/or the first upper nozzle 171a and the second upper nozzle 172a may be moved, so that the height difference and/or angle between the first upper nozzle 171a and/or the second upper nozzle 172a and the separator 122 can be adjusted or maintained. In this way, the distance between the first upper nozzle 171a and the separator guide 125 in the moving box 18 and the distance between the second upper nozzle 172a and the separator guide 125 may kept the same, so that the application reliability of the adhesive applied from the first upper nozzle 171a and the second upper nozzle 172a can be further improved.

The electrode assembly manufacturing method according to an example of the present disclosure using such an electrode assembly manufacturing apparatus is performed as follows (e.g. for manufacturing a unit cell for an electrode assembly).

First, referring to Figs. 1 and 8, when the first electrode sheet 1111 is unwound from the first electrode reel 111, the first cutter 131 cuts the first electrode sheet 1111 to form a plurality of first electrodes 1112 (S101).

Meanwhile, when the separator sheet 122 is unwound from the separator reel 121, the separator sheet 122 is arranged (e.g. seated) on the upper surface of the table 16a in the state of (while) being pressed (e.g. in contact with and deflected) by the first pressure roller 1301, and the first upper nozzle 171a applies an adhesive to the separator sheet 122 (S102). At this time, the first upper nozzle 171a forms a first adhesive layer 1710 on a first region 1221 (e.g. a first portion) of the separator sheet 122 while linearly moving toward the second transfer device 142.

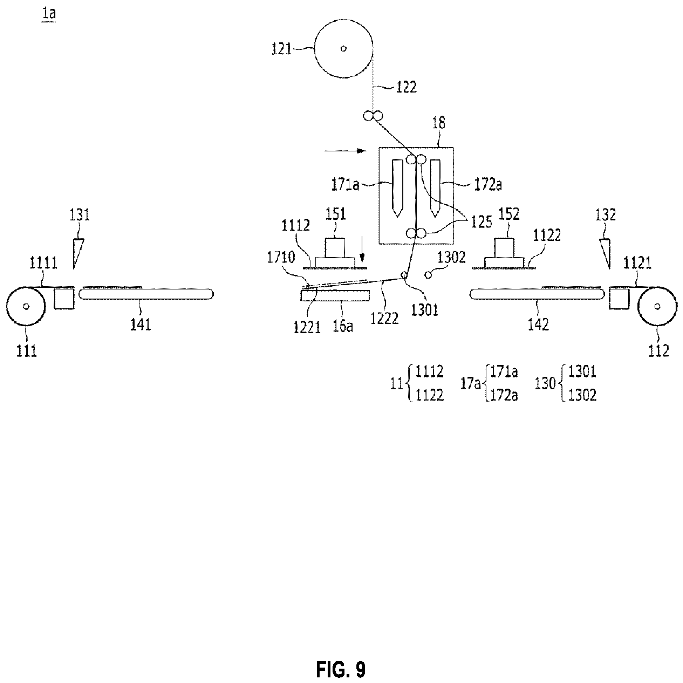

Fig. 9 is a schematic diagram of the apparatus 1a for manufacturing an electrode assembly for use in a battery according to an example of the present disclosure, which shows a state in which a first electrode is seated on a first region (e.g. a first portion) of a separator sheet.

Further, referring to Figs. 1 and 9, the first head 151 can linearly move on (e.g. towards) the table 16 in a state of holding (e.g. adsorbing) the first electrode 1112. And, when the first head 151 is located above the table 16a (e.g. facing the table 16a), as shown in Fig. 9, the first head 151 arranges (e.g. seats) the first electrode 1112 on the first region 1221 (e.g. the first portion) of the separator sheet 122 on which the first adhesive layer 1710 is formed (S103 ).

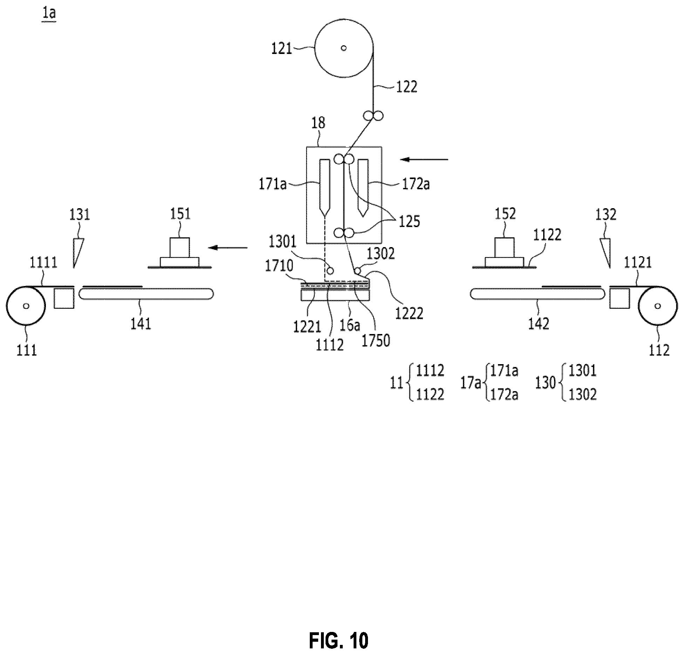

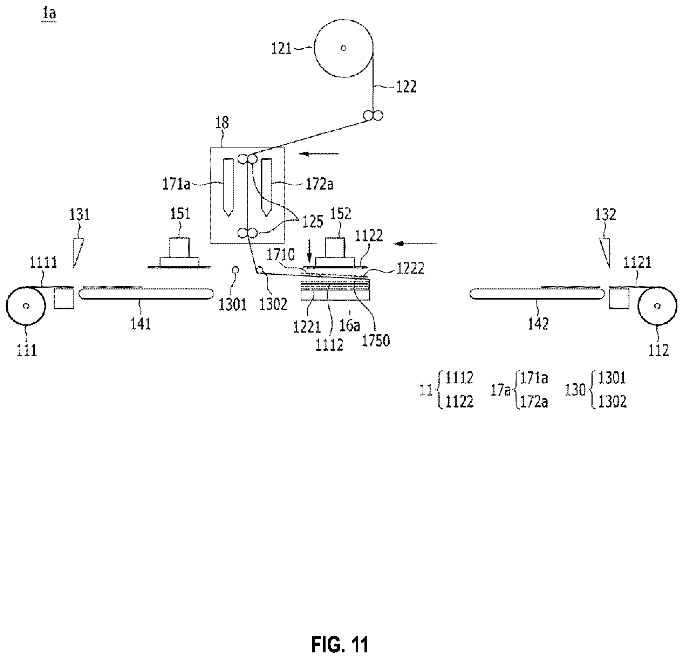

Fig. 10 is a schematic diagram of the apparatus 1a for manufacturing an electrode assembly for use in a battery according to an example of the present disclosure, which shows a state in which an adhesive is applied to an upper portion (e.g. a top surface) of a first electrode while a first upper nozzle linearly moves. Fig. 11 is a schematic diagram of the apparatus 1a for manufacturing an electrode assembly for use in a battery according to an example of the present disclosure, which shows a state in which an adhesive has been applied to a second region (e.g. a second portion) of the separator sheet while the second upper nozzle linearly moves, and the second electrode is seated on the second region (e.g. the second portion) of the separator sheet.

Further, referring to Figs. 1, 10 and 11, as the first upper nozzle 171a moves toward the first transfer device 141 after the first electrode 1112 is seated on the first region 1221 (e.g. the first portion) of the separator sheet 122, the first upper nozzle 171a applies an adhesive to the upper portion (e.g. the top surface) of the first electrode 1112 to form a second adhesive layer 1750. Further, as the second upper nozzle 172a also moves toward the first transfer device 141 in a state where one surface of the separator sheet 122 is pressed by the second pressure roller 1302 (e.g. where the separator sheet 122 is in contact with and being deflected by the second pressure roller 1302), an adhesive is applied to the second region 1222 (e.g. the second portion) of the separator sheet 122 to form another first adhesive layer 1710 (S104).

Further, referring to Figs. 1, 10 and 11, as the separator guide 125 and a pair of pressure rollers 130 move toward the first transfer device 141 on the basis of (relative to) the table 16a, one side of the separator sheet 122 is folded, so that the second region 1222 (e.g. the second portion) of the separator sheet 122 covers the first electrode 1112 on which the second adhesive layer 1750 is formed (S105).

Meanwhile, as shown in Fig. 8, when the second electrode sheet 1121 is unwound from the second electrode reel 112, the second cutter 132 cuts the second electrode sheet 1121. Then, a plurality of second electrodes 1122 are formed. After that, as shown in Fig. 11, when the second transfer device 142 transfers the second electrode 1122, the second head 152 adsorbs the second electrode 1122. And, when the second region 1222 (e.g. the second portion) of the separator sheet 122 covers the first electrode 1112, the second head 152 adsorbing the second electrode 1122 moves upward of the second region 1222 (e.g. facing the second region 1222), so that the second electrode 1122 is seated on the second region 1222 (e.g. the second portion) in which the first adhesive layer 1710 is formed.

Then, similar as shown in Fig. 10, the second upper nozzle 172 applies an adhesive to the upper portion (e.g. a top surface) of the second electrode 1122. Here, as the second upper nozzle 172a moves toward the second transfer device 142, the second upper nozzle 172a may form another second adhesive layer 1750 on the second electrode 1122.

After that, as the separator guide 125 and a pair of pressure rollers 130 move toward the second transfer device 142 on the basis of (relative to) the table 16a, the other side of the separator sheet 122 is folded, so that the first region 1221 (e.g. a third portion) of the separator sheet 122 covers the second electrode 1122 on which the second adhesive layer 1750 is formed.

By repeating the above processes, the electrode assembly manufacturing method according to an example of the present disclosure can be performed, e.g. to sequentially form a plurality of unit cells of the electrode assembly.

When such cell manufacturing method according to the examples of the present disclosure is performed, the adhesives are respectively applied to the upper and lower portions (e.g. bottom and top surfaces) of the electrode 11 at the time of stacking the electrode 11 and the separator sheet 122 in a Z-folding type, thereby capable of preventing the electrode 11 from being offset or displaced from a target position.

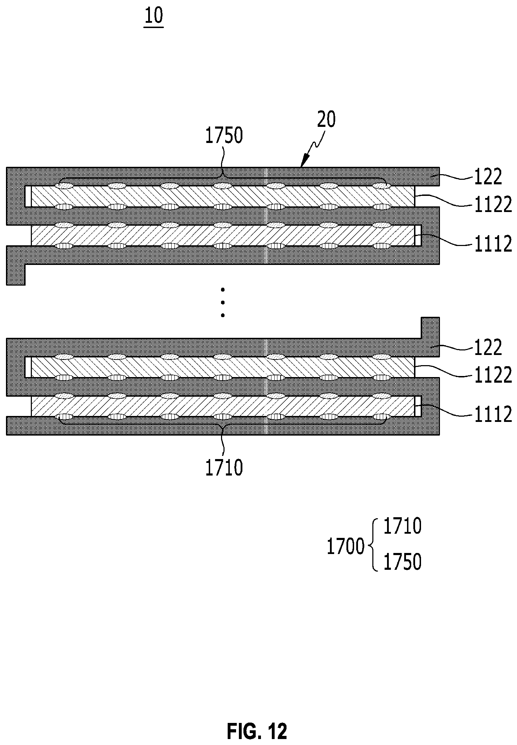

Fig. 12 is a cross-sectional view of an electrode assembly according to an example of the present disclosure.

Referring to Figs. 7, 11 and 12, in the electrode assembly 10 in which electrodes and a separator sheet are alternately stacked according to an example of the present disclosure, the electrodes 11 include a first electrode 1112 and a second electrode 1122, and the separator sheet 122 has a zigzag shape formed by being folded at least twice.

Here, the separator sheet 122 is folded in a state where the first electrode 1112 is seated on the first region 1221 (e.g. the first portion) of the separator sheet 122, so that the second region 1222 (e.g. the second portion) of the separator 122 covers the first electrode 1112. Further, the separator sheet 122 is folded in a state where the second electrode 1122 is seated on the second region 1222 (e.g. the second portion) of the separator sheet 122, so that the first region 1221 of the separator sheet 122 (e.g. the third portion) covers the second electrode 1122.

In particular, the electrode assembly 10 according to the present example may be configured such that the electrodes 11 are stacked one by one on the first region 1221 (e.g. the first, third, ... portion) or the second region 1222 (e.g. the second, fourth, ... portion) of the separator sheet 122. At this time, after measuring the presence or absence of misalignment, the electrodes 11 can be stacked at an accurate position on the separator sheet 122 in a state where the position is corrected if necessary. Thereby, the electrode assembly 10 according to the present example can be further improved in the alignment degree between the electrode 11 and the separator sheet 122.

Here, an adhesive layer 1700 is formed between the electrodes 11 and the separator sheet 122 (i.e. an adhesive is arranged between the separator sheet 122 and the first and/or second electrodes 1112, 1122). More specifically, the adhesive layer 1700 includes a first adhesive layer 1710 and a second adhesive layer 1750. The first adhesive layer 1710 may be located between the lower portion (e.g. bottom surfaces) of the electrodes 11 and the separator sheet 122, and the second adhesive layer 1750 may be located between the upper portion (e.g. top surfaces) of the electrodes 11 and the separator sheet 122.

In one example, the first adhesive layer 1710 and the second adhesive layer 1750 may be formed by applying (e.g. arranging) an adhesive in the form of a plurality of spots (e.g. dots), respectively. However, as described above in the electrode assembly manufacturing apparatus 1, the shapes of the first adhesive layer 1710 and the second adhesive layer 1750 are not limited thereto, and may be formed in various shapes. For example, the first adhesive layer 1710 and/or the second adhesive layer 1750 may additionally or alternatively be formed by applying (e.g. arranging) the adhesive in the form of a plurality of lines (e.g. lines extending along a width or a length of the electrodes 11, for example in the direction of view of Fig. 12).

In specific examples, the first adhesive layer 1710 may be formed such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the first adhesive layer 1710 may be formed so as to occupy 0.01% to 50%, particularly 0.05% to 30%, and more particularly 0.08% to 1% of a total area of the electrode 1112 in a plan view (normal to the electrode 1112).

In specific examples, the second adhesive layer 1750 may be formed such that a diameter of an individual spot (or an individual dot) of the plurality of spots (or dots) of the respective adhesive and/or an individual line of the plurality of lines of the respective adhesive is between 300 µm and 3000 µm, or particularly between 400 µm and 2000 µm, or more particularly between 500 µm and 1200 µm. Additionally or alternatively, the second adhesive layer 1750 may be formed so as to occupy 0.01% to 50%, particularly 0.05% to 30%, and more particularly 0.08% to 1% of a total area of the electrode 1122 in a plan view (normal to the electrode 1122).

Thereby, the electrode assembly 10 according to the present example forms an adhesive layer 1700 between the electrodes 11 and the separator sheet 122, and thus even in the case of a low-cost separator whose adhesive strength is low, the electrodes 11 and the separator can be stably fixed to each other, thereby capable of preventing the electrodes 11 from being offset or displaced from a target position. In addition, the electrode assembly 10 of the present example covers the upper and lower portions of the electrode 11 in a shape in which a separator sheet 122 is folded, so that the alignment degree of the electrode 11 and the efficiency of the process can be further improved.

Further, since there is no need to perform a laminating process as in the conventional case, it is possible to reduce the defective rate in the process caused by heat and pressure. And, since the laminator can be removed, the volume of the manufacturing apparatus can be reduced and the manufacturing process can be simplified.

The separator sheet 122 (separator) may for example comprise or consist of a flexible and electrically insulating material, in particular a porous, flexible and electrically insulating material, e.g. a resin film such as a polyolefin-based resin film.

The separator according to the example described herein may be a CCS (Ceramic Coated Separator. Generally, the separator may have a raw film and a coating layer formed on at least one surface of the raw film, wherein the coating layer may include alumina powder and a binder for aggregating them. SRS (Safety Reinforced Separator) has a large amount of binder coated on the surface of the coating layer, but CCS may not have the binder coated on the surface of the coating layer, or may have a much lower surface binder content as compared with SRS. For example, e.g. in the case of the CCS separator according to the present example, the content of the binder coated on the surface of the coating layer of the separator may be about 3 wt% or less, in some examples about 2 wt% or less, in one example about 1 wt% or less.

When the separator is CCS, the internal electrode contained in the electrode assembly may be transferred in an unfixed state, and thus alignment may be disturbed during transfer. Of course, when the separator is CCS, it can be fixed with heat and pressure, but the alignment of the internal electrodes may be disturbed even in the process of transferring to the fixing device for heat and pressure after forming the stacked body of the electrode and the separator. Further, there is a disadvantage in that an expensive separator having a high binder content must be used in order to attach the electrode and the separator by heat and pressure. On the contrary, according to the present example, it is possible to increase the fixing force while preventing the alignment of the internal electrodes from being disturbed during transfer.

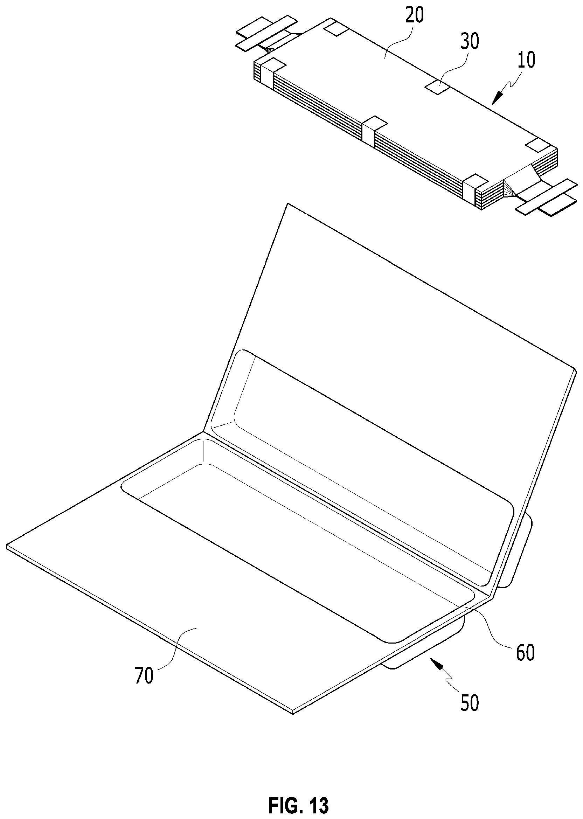

Fig. 13 is an exploded perspective view of a battery cell according to an example of the present disclosure.

Referring to Figs. 7, 11, 12 and 13, a battery cell according to an example of the present disclosure is a battery cell including the electrode assembly 10 described above, wherein the battery cell includes a battery case 50 for housing the electrode assembly 10 together with an electrolytic solution. The adhesive layer 1700 may be dissolved (e.g. partially or entirely) in the electrolytic solution, e.g. by application of heat and/or pressure.

Here, a fixing member such as a fixing tape 30 may be attached to the outside of the electrode assembly 10. Therefore, the stacked alignment state of the electrode 11 and the separator sheet 122 can be maintained. The electrode assembly 10 to which the fixing tape 30 is attached may be referred to as a final electrode assembly 20.

The battery case 50 includes an electrode assembly 10 and a receiving part 60 to which the final electrode assembly 20 is mounted, and a sealing part 70 for sealing the outer periphery of the receiving part 60. In one example, the battery case 50 may be a laminated sheet including a resin layer and a metal layer. More specifically, the battery case 50 may be made of a laminated sheet, and may include an outer resin layer for forming the outermost shell, a blocking metal layer for preventing the penetration of a material, and an inner resin layer for sealing.

Further, the receiving part 60 of the battery case 50 may be configured to house an electrolytic solution together with the electrode assembly 10. Here, the adhesive layer 1700 contained in the electrode assembly 10 may be dissolved into the electrolytic solution. In particular, in the battery cell according to the present example, in an activation step such as a formation step, the adhesive layer 1700 contained in the electrode assembly 10 may be dissolved into an electrolytic solution under high temperature and/or pressure conditions.

More specifically, in the battery cell according to the present example, when the adhesive layer 1700 formed between the electrode 11 of the electrode assembly 10 and the separator sheet 122 is dissolved into the electrolytic solution, the adhesive 14 may hardly remain on the surface of the electrode 11 (e.g. may be dissolved entirely or almost entirely), or may not be completely eliminated (e.g. may only be dissolved partially).

The separator sheet 122 may generally be a porous sheet. In this regard, a part of the adhesive 14 may be permeated into the separator sheet 122. However, even in the case of the adhesive layer 1700 penetrated into the separator sheet 122, it may be mostly dissolved in the electrolytic solution, or may be completely dissolved. In this process, traces of application of the adhesive layer 1700 may remain on the separator sheet 122.

Here, the application trace of the adhesive layer 1700 means that the adhesive component contained in the adhesive layer 1700 does not remain, but a part of the outer surface of the separator sheet 122 is deformed and/or modified by the adhesive layer 1700. However, the present disclosure is not limited thereto, and the application trace of the adhesive layer 1700 may mean traces that can confirm the application or (former) presence of the adhesive in various ways, like traces that can confirm with the naked eye the application of the adhesive. Thereby, the application trace of the adhesive layer 1700 formed on the separator sheet 122 may be formed at the same position as the position where the adhesive is applied (e.g. in a plurality of spots and/or lines).

Therefore, the battery cell according to the present example can prevent the performance degradation and realize excellent battery performance because the adhesive layer 1700 is partially or completely dissolved on the surface of the electrode 11 or the separator 122, and the unreacted region due to the adhesive layer 1700 disappears.

In view of the above, it will be appreciated that the present disclosure also relates to the following examples:
According to an example of the present disclosure, there is provided an apparatus for manufacturing a battery cell, the apparatus comprising: an electrode reel (e.g. as part of or an example of an electrode supply unit) on which an electrode sheet having a plurality of electrodes formed thereon is unwound; a separator reel (e.g. as part of or an example of a separator supply unit) in which a separator sheet that is folded when the electrodes are seated, covers the electrodes and is stacked with the electrodes is unwound; a table (e.g. as part of or an example of a stacking table) on which the electrode and the separator sheet are seated on the upper surface; a separator guide that guides the folding direction of the separator sheet; a pair of upper nozzles (e.g. as part of or an example of first and second adhesive applicators) that apply an adhesive to at least a part of the separator sheet or the electrode seated on the table; and a pair of pressure rollers (e.g. as part of or an example of first and second deflectors) that press the separator sheet guided from the separator guide.

The pair of pressure rollers may be located between the table and the separator guide.

The electrode reel may include a first electrode reel (e.g. as part of or an example of a first electrode supply unit) on which a first electrode sheet having a plurality of first electrodes formed thereon is unwound. Additionally or alternatively, the electrode reel may include a second electrode reel (e.g. as part of or an example of a second electrode supply unit) on which a second electrode sheet having a plurality of second electrodes formed thereon is unwound.

The apparatus for manufacturing a battery cell may further include a first transfer device (e.g. as part of or an example of a first electrode supply unit) that transfers the first electrode toward the table; and/or a second transfer device (e.g. as part of or an example of a second electrode supply unit) that transfers the second electrode toward the table.

The pair of upper nozzles may include a first upper nozzle (e.g. as part of or an example of a first adhesive applicator) and a second upper nozzle (e.g. as part of or an example of a second adhesive applicator). The pair of upper nozzles may apply an adhesive to the separator sheet and/or the electrode located on the table, respectively.

The first upper nozzle and the second upper nozzle may be arranged on both sides (opposite sides) with the separator guide being interposed therebetween.

The pair of pressure rollers may include a first pressure roller (e.g. as part of or an example of a first deflector) and a second pressure roller (e.g. as part of or an example of a second deflector). The first pressure roller may be located between the first upper nozzle and the separator guide. The second pressure roller may be located between the second upper nozzle and the separator guide.

The first electrode may be seated on a first region of the separator sheet. Additionally or alternatively, the second electrode may be seated on a second region of the separator sheet.

The apparatus for manufacturing a battery cell may further include a first head (or header, e.g. as part of or an example of a first electrode placement device) that adsorbs the first electrode and seats it on the first region; and/or a second head (or header, e.g. as part of or an example of a second electrode placement device) that adsorbs the second electrode and seats it on the second region.

The separator guide, the pair of upper nozzles, and/or the pair of pressure rollers may be fixed. The table may linearly reciprocate toward the first transfer device and the second transfer device.

The table may be fixed. The separator guide, the pair of upper nozzles, and/or the pair of pressure rollers may linearly reciprocate toward the first transfer device and the second transfer device.

The apparatus for manufacturing a battery cell may further include a moving box (e.g. as part of or an example of a carriage) that houses the separator guide and the pair of upper nozzles therein.

According to another example of the present disclosure, there is provided a method for manufacturing a battery cell, the method comprising the steps of: cutting a first electrode sheet unwound from a first electrode reel (e.g. as part of or an example of a first electrode supply unit) to form a plurality of first electrodes; guiding a separator sheet unwound from the separator reel (e.g. as part of or an example of a separator supply unit) along a separator guide, seating the separator sheet on a table (e.g. as part of or an example of a stacking table) in a state where a first pressure roller (e.g. as part of or an example of a first deflector) presses the separator sheet guided by the separator guide and applying an adhesive to a first region of the separator sheet from a first upper nozzle (e.g. as part of or an example of a first adhesive applicator); seating the first electrode on a first region of the separator sheet; applying an adhesive to a first region of the separator sheet from the first upper nozzle; and folding the separator sheet in a folding direction guided by the separator guide, so that a second region of the separator sheet covers the first electrode.

After the step of covering the upper portion of the first electrode, the method may further include some or all of: a step of cutting a second electrode sheet unwound from a second electrode reel (e.g. as part of or an example of a second electrode supply unit) to form a plurality of second electrodes; a step of applying an adhesive to a second region of the separator sheet from a second upper nozzle (e.g. as part of or an example of a second adhesive applicator) in a state where a second pressure roller (e.g. as part of or an example of a second deflector) presses the separator sheet guided from the separator guide; a step of seating the second electrode on a second region of the separator sheet; a step of applying an adhesive to an upper portion of the second electrode from the second upper nozzle; and a step of folding the separator sheet in a folding direction guided by the separator guide, so that the first region of the separator sheet covers the second electrode.

Some or all of the separator guide, the first upper nozzle, the second upper nozzle, the first pressure roller and the second pressure roller may be fixed. The table may linearly reciprocate toward the first transfer device and the second transfer device.

The table may be fixed. Some or all of the separator guide, the first upper nozzle, the second upper nozzle, the first pressure roller and the second pressure roller may linearly reciprocate toward the first transfer device and the second transfer device.

According to another example of the present disclosure, there is provided an electrode assembly in which an electrode and a separator sheet are alternately stacked, wherein the electrode comprises a first electrode and a second electrode, wherein the separator sheet has a zigzag shape formed by being folded at least twice, wherein the separator sheet is folded in a state where the first electrode is seated on a first region of the separator sheet, so that a second region of the separator sheet covers the first electrode, and is folded in a state where the second electrode is seated on the second region, so that the first region of the separator sheet covers the second electrode, and wherein an adhesive layer is formed between the electrode and the separator sheet.

The adhesive layer may include a first adhesive layer and/or a second adhesive layer. The first adhesive layer may be located between the lower portion of the electrode and the separator sheet. The second adhesive layer may be located between the upper portion of the electrode and the separator sheet.

The first adhesive layer and/or the second adhesive layer may be respectively formed by applying an adhesive in the form of a plurality of dots.

According to yet another example of the present disclosure, there is provided a battery cell comprising the above-mentioned electrode assembly, wherein the battery cell includes a battery case that houses the electrode assembly together with an electrolytic solution, and wherein the adhesive layer may be dissolved in the electrolytic solution.

As far as technically feasible, features, elements and/or functionalities of the examples listed above may be combined with, integrated in and/or substituted with any of the features, elements and/or functionalities of any one of the other examples described herein and vice-versa.

Although examples of the present invention have been described in detail above, the scope of the present invention is not limited thereto. Various modifications and improvements made by those skilled in the art using the basic concepts of the present disclosure also fall within the scope of the present invention as defined by the appended claims.

### DESCRIPTION OF REFERENCE NUMERALS

1, 1a: cell manufacturing apparatus
11: electrode
16, 16a: table
17: nozzle
111: first electrode reel
112: second electrode reel
121: separator reel
122: separator sheet
125: separator guide
131: first cutter
132: second cutter
141: first transfer device
142: second transfer device
151: first head
152: second head
171, 171a: first upper nozzle
172, 172a: second upper nozzle
1111: first electrode sheet
1112: first electrode
1121: second electrode sheet
1122: second electrode
1221: first region
1222: second region
1710: first adhesive layer
1750: second adhesive layer

## Claims

1. An apparatus (1, 1a) for manufacturing an electrode assembly (10) for use in a battery, the apparatus (1, 1a) comprising:
an electrode supply unit (111, 112, 141, 142, 151, 152) configured to provide a plurality of electrodes (1112, 1122);
a separator supply unit (121) configured to provide a continuous separator sheet (122);
a stacking table (16, 16a) for stacking the electrodes (1112, 1122) thereon with the separator sheet (122) folded between the electrodes (1112, 1122) to form the electrode assembly (10);
a separator guide (125) configured to guide the folding of the separator sheet (122), the separator guide (125) being configured to move along a first direction relative to the stacking table (16, 16a) and/or the stacking table (16, 16a) being configured to move along the first direction relative to the separator guide (125);
a first adhesive applicator (171, 171a, 172, 172a) configured to apply an adhesive to at least a part of the separator sheet (122) located between the separator guide (125) and the stacking table (16, 16a); and
a first deflector (1301, 1302) configured to deflect the separator sheet (122) between the separator guide (125) and the stacking table (16, 16a) for maintaining an orientation and/or a distance of the separator sheet (122) relative to the first adhesive applicator (171, 171a, 172, 172a) while the separator guide (125) is moving relative to the stacking table (16, 16a) and/or the stacking table (16, 16a) is moving relative to the separator guide (125).

2. The apparatus (1, 1a) of claim 1, further comprising:
a second adhesive applicator (172, 172a) configured to apply an adhesive to at least a part of the separator sheet (122) located between the separator guide (125) and the stacking table (16, 16a); and
a second deflector (1302) configured to deflect the separator sheet (122) between the separator guide (125) and the stacking table (16, 16a) for maintaining an orientation and/or a distance of the separator sheet (122) relative to the second adhesive applicator (172, 172a) while the separator guide (125) is moving relative to the stacking table (16, 16a) and/or the stacking table (16, 16a) is moving relative to the separator guide (125),
in particular wherein:
the separator guide (125) is arranged between the first and second deflectors (1301, 1302) along the first direction; and/or
the separator guide (125) comprises a pair of guiding surfaces for guiding the folding of the separator sheet (122) and a distance between the first and second deflectors (1301, 1302) is larger than a distance between said guiding surfaces.

3. The apparatus (1, 1a) of claim 1 or 2, wherein:
along the first direction, the first deflector (1301) is arranged between the first adhesive applicator (171, 171a) and the separator guide (125) and/or the second deflector (1302) is arranged between the separator guide (125) and the second adhesive applicator (172, 172a); and/or
the first deflector (1301) and/or the second deflector (1302) each are or comprise a deflecting roller arranged between the separator guide (125) and the stacking table (16, 16a); and/or
the first deflector (1301) and/or the second deflector (1302) is/are fixed or configured to be fixed relative to the separator guide (125) at least along the first direction.

4. The apparatus (1, 1a) of any one of the preceding claims, wherein the first deflector (1301) and/or the second deflector (1302) is/are configured to deflect the separator sheet (122) such that:
an angle between the separator sheet (122) and the first and second adhesive applicator (171, 171a, 172, 172a), respectively, varies by less than 20°, preferably by less than 10° while the first and second adhesive applicator (171, 171a, 172, 172a), respectively, applies the adhesive to a portion (1221, 1222) of the separator sheet (122) on which an electrode (1112, 1122) is to be arranged; and/or
a distance between the separator sheet (122) and the first and second adhesive applicator (171, 171a, 172, 172a), respectively, varies by less than 25%, preferably by less than 10% while the first and second adhesive applicator (171, 171a, 172, 172a), respectively, applies the adhesive to said portion (1221, 1222) of the separator sheet (122) on which said electrode (1112, 1122) is to be arranged.

5. The apparatus (1, 1a) of any one of the preceding claims, wherein:
the electrode supply unit (111, 112, 141, 142, 151, 152) comprises a first electrode supply unit (111, 141, 151) configured to provide a plurality of first electrodes (1112) and a second electrode supply unit (112, 142, 152) configured to provide a plurality of second electrodes (1122) and the separator guide (125) and/or the stacking table (16, 16a) is/are configured to move back and forth between the first and second electrode supply units (111, 112, 141, 142, 151, 152) along the first direction; and/or
the separator guide (125), the first adhesive applicator (171), the second adhesive applicator (172), the first deflector (1301) and/or the second deflector (1302) are fixed or configured to be fixed at least along the first direction and the stacking table (16) is configured to move back and forth along the first direction or the stacking table (16a) is fixed or configured to be fixed at least along the first direction and the separator guide (125), the first adhesive applicator (171a), the second adhesive applicator (172a), the first deflector (1301) and/or the second deflector (1302) are configured to move back and forth along the first direction; and/or
the separator guide (125), the first adhesive applicator (171, 171a), the second adhesive applicator (172, 172a), the first deflector (1301) and/or the second deflector (1302) are arranged in and/or on a movable carriage (18) that is configured to move back and forth along the first direction.

6. The apparatus (1, 1a) of any one of the preceding claims, wherein:
the first adhesive applicator (171, 171a) and/or the second adhesive applicator (172, 172a) is/are configured to apply an adhesive to a respective portion (1221, 1222) of the separator sheet (122) while said portion (1221, 1222) is being folded onto an electrode (1112, 1122) arranged on the stacking table (16, 16a); and/or
the first adhesive applicator (171, 171a) and/or the second adhesive applicator (172, 172a) is/are further configured to apply the adhesive to an electrode (1112, 1122) arranged on the stacking table (16, 16a) while a portion (1221, 1222) of the separator sheet (122) is being folded onto said electrode (1112, 1122) arranged on the stacking table (16, 16a), in particular wherein the apparatus (1, 1a) comprises the first adhesive applicator (171, 171a) and the second adhesive applicator (172, 172a) and wherein the first adhesive applicator (171, 171a) is configured to apply the adhesive to a portion (1221) of the separator sheet (122) that is to cover an electrode (1122) arranged on the stacking table (16, 16a) while the second adhesive applicator (171, 171a) applies the adhesive to said electrode (1122) and/or the second adhesive applicator (172, 172a) is configured to apply the adhesive to a portion (1222) of the separator sheet (122) that is to cover an electrode (1112) arranged on the stacking table (16, 16a) while the first adhesive applicator (171, 171a) applies the adhesive to said electrode (1112).

7. The apparatus (1, 1a) of any one of the preceding claims, wherein the first deflector (1301) and/or the second deflector (1302) is/are configured to apply pressure to a portion (1221, 1222) of the separator sheet (122) that is folded or being folded onto an electrode (1112, 1122) arranged on the stacking table (16, 16a) for spreading adhesive arranged between said portion (1221, 1222) of the separator sheet (122) and said electrode (122).

8. The apparatus (1, 1a) of any one of the preceding claims, wherein:
the electrode supply unit (111, 112, 141, 142, 151, 152) is or comprises an electrode reel (111, 112) on which an electrode sheet (1111, 1121) having a plurality of electrodes (1112, 1122) formed thereon is unwound;
the separator supply unit (121) is or comprises a separator reel (121) in which a separator sheet (122) that is folded when the electrodes (1112, 1122) are seated, covers the electrodes (1112, 1122) and is stacked with the electrodes (1112, 1122) is unwound;
the stacking table (16, 16a) is or comprises a table (16, 16a) on which the electrode (1112, 1122) and the separator sheet (122) are seated on the upper surface;
the separator guide (125) guides the folding direction of the separator sheet (122);
the first adhesive applicator (171, 171a, 172, 172a) is or comprises a pair of upper nozzles (171, 171a, 172, 172a) that apply an adhesive to at least a part of the separator sheet (122) or the electrode (1112, 1122) seated on the table (16, 16a); and
the first deflector (1301, 1302) is or comprises a pair of pressure rollers that press the separator sheet (122) guided from the separator guide (125).

9. A method of manufacturing an electrode assembly (10) for use in a battery, the method comprising the steps of:
arranging a first portion (1221) of a continuous separator sheet (122) on a stacking table (16, 16a) using a separator guide (125) for guiding the separator sheet (122);
applying an adhesive to at least a part of said first portion (1221) of the separator sheet (122) using a first adhesive applicator (171, 171a) while said first portion (1221) is being arranged on the stacking table (16, 16a); and
arranging a first electrode (1112) on said first portion (1221) of the separator sheet (122),
wherein the separator guide (125) and the stacking table (16, 16a) are moved relative to each other for arranging the first portion (1221) on the stacking table (16, 16a) and the separator sheet (122) is being deflected by a first deflector (1301) arranged between the separator guide (125) and the stacking table (16, 16a) to maintain an orientation and/or a distance of the separator sheet (122) relative to the first adhesive applicator (171, 171a) while the separator guide (125) and the stacking table (16, 16a) are moving relative to each other.

10. The method of claim 9, further comprising:
folding the separator sheet (122) to cover the first electrode (1112) arranged on the first portion (1221) with a second portion (1222) of the separator sheet (122), wherein the separator sheet (122) is folded using the separator guide (125) to guide the separator sheet (122);
applying an adhesive to at least a part of said second portion (1222) of the separator sheet (125) using a second adhesive applicator (171, 171a) while said second portion (1222) is being arranged on the first electrode (1112); and
arranging a second electrode (1122) on said second portion (1222) of the separator sheet (122),
in particular wherein the separator guide (125) and the stacking table (16, 16a) are moved relative to each other for folding the separator sheet (122) and the separator sheet (122) is being deflected by a second deflector (1302) arranged between the separator guide (125) and the stacking table (16, 16a) to maintain an orientation and/or a distance of the separator sheet (122) relative to the second adhesive applicator (172, 172a) while the separator guide (125) and the stacking table (16, 16a) are moving relative to each other.

11. The method of claim 9 or 10, wherein the method further comprises:
applying the adhesive to the first electrode (1112) arranged on the first portion (1221) of the separator sheet (122) and/or to at least a part of a portion (1222) of the separator sheet (122) that is to cover the first electrode (1112) and/or
applying the adhesive to the second electrode (1122) arranged on the second portion (1222) of the separator sheet (122) and/or to at least a part of a portion (1221) of the separator sheet (122) that is to cover the second electrode (1122),
in particular wherein the adhesive is applied to said part of the second portion (1222) of the separator sheet (122) and to the first electrode (1112) arranged on the first portion (1221) of the separator sheet (122) simultaneously at least in part.

12. The method of any one of claims 9 to 11, wherein:
the method comprises cutting a first electrode sheet (1111) unwound from a first electrode reel (111) to form a plurality of first electrodes (1112);
arranging said first portion (1221) of the separator sheet (122) is or comprises guiding the separator sheet (122) unwound from a separator reel (121) along a separator guide (125), seating the separator sheet (122) on a table (16, 16a) in a state where a first pressure roller (1301) presses the separator sheet (122) guided by the separator guide (125) and an adhesive is being applied to a first region (1221) of the separator sheet (122) from a first upper nozzle (171, 171a);
arranging the first electrode (1112) on said first portion (1221) of the separator sheet (122) is or comprises seating the first electrode (1112) on a first region (1221) of the separator sheet (122);
applying the adhesive to at least said part of the first portion (1221) of the separator sheet (122) is or comprises applying an adhesive to a first region (1221) of the separator sheet (122) from a first upper nozzle (171, 171a); and
the method comprises folding the separator sheet (122) in a folding direction guided by the separator guide (125), so that a second region (1222) of the separator sheet (122) covers the first electrode (1112).

13. An electrode assembly (10) for use in a battery, the electrode assembly (10) comprising a plurality of first electrodes (1112) and a plurality of second electrodes (1122), wherein:
the first and second electrodes (1112, 1122) are alternately stacked and separated from each other by a separator sheet (122) that is folded between the first and second electrodes (1112, 1122) in a zigzag shape; and
an adhesive is arranged between the separator sheet (122) and the first electrodes (1112) and/or between the separator sheet (122) and the second electrodes (1122), said adhesive being configured to be dissolved in an electrolytic solution for use in a battery cell.

14. The electrode assembly (10) of claim 13, wherein:
said adhesive is configured to be dissolved in the electrolytic solution by application of heat and/or pressure; and/or
some or all of said adhesive is arranged in a plurality of spots and/or lines; and/or
at least some of said adhesive was arranged between the separator sheet (122) and the first and/or second electrodes (1112, 1122) by applying the adhesive to a surface of the respective electrode (1112, 1122) prior to arranging said surface on the separator sheet (122) and/or covering said surface with the separator sheet (122), wherein some or all of said adhesive was arranged between the separator sheet (122) and the first and/or second electrodes (1112, 1122) by applying the adhesive to a respective first portion (1221, 1222) of the separator sheet (122) prior to arranging a first surface of the respective electrode (1112, 1122) on said first portion (1221, 1222) of the separator sheet (122) and by applying the adhesive to a second surface of the respective electrode (1221, 1222) opposite to the first surface prior to covering said second surface of the respective electrode (1221, 1222) with a respective second portion (1222, 1221) of separator sheet (122).

15. A battery cell comprising an electrode assembly (10) according to claim 13 or 14 and a battery case (70) housing the electrode assembly (10) together with an electrolytic solution, wherein the adhesive has been dissolved in the electrolytic solution at least in part.

## Patentansprüche

1. Vorrichtung (1, 1a) zum Herstellen einer Elektrodenanordnung (10) zur Verwendung in einer Batterie, wobei die Vorrichtung (1, 1a) umfasst:
eine Elektrodenzuführungseinheit (111, 112, 141, 142, 151, 152), die dazu eingerichtet ist, eine Vielzahl von Elektroden (1112, 1122) bereitzustellen;
eine Separatorzuführungseinheit (121), die dazu eingerichtet ist, eine kontinuierliche Separatorfolie (122) bereitzustellen;
einen Stapeltisch (16, 16a) zum Stapeln der Elektroden (1112, 1122) darauf, wobei die Separatorfolie (122) zwischen den Elektroden (1112, 1122) gefaltet ist, um die Elektrodenanordnung (10) zu bilden;
eine Separatorführung (125), die dazu eingerichtet ist, das Falten der Separatorfolie (122) zu führen, wobei die Separatorführung (125) dazu eingerichtet ist, sich entlang einer ersten Richtung relativ zu dem Stapeltisch (16, 16a) zu bewegen, und/oder wobei der Stapeltisch (16, 16a) dazu eingerichtet ist, sich entlang der ersten Richtung relativ zu der Separatorführung (125) zu bewegen;
einen ersten Klebstoffapplikator (171, 171a, 172, 172a), der dazu eingerichtet ist, einen Klebstoff auf zumindest einen Teil der Separatorfolie (122) aufzubringen, der sich zwischen der Separatorführung (125) und dem Stapeltisch (16, 16a) befindet; und
einen ersten Umlenker (1301, 1302), der dazu eingerichtet ist, die Separatorfolie (122) zwischen der Separatorführung (125) und dem Stapeltisch (16, 16a) umzulenken, um eine Orientierung und/oder einen Abstand der Separatorfolie (122) relativ zu dem ersten Klebstoffapplikator (171, 171a, 172, 172a) beizubehalten, während sich die Separatorführung (125) relativ zu dem Stapeltisch (16, 16a) bewegt und/oder sich der Stapeltisch (16, 16a) relativ zu der Separatorführung (125) bewegt.

2. Vorrichtung (1, 1a) nach Anspruch 1, ferner umfassend:
einen zweiten Klebstoffapplikator (172, 172a), der dazu eingerichtet ist, einen Klebstoff auf zumindest einen Teil der Separatorfolie (122) aufzubringen, der sich zwischen der Separatorführung (125) und dem Stapeltisch (16, 16a) befindet; und
einen zweiten Umlenker (1302), der dazu eingerichtet ist, die Separatorfolie (122) zwischen der Separatorführung (125) und dem Stapeltisch (16, 16a) umzulenken, um eine Orientierung und/oder einen Abstand der Separatorfolie (122) relativ zu dem zweiten Klebstoffapplikator (172, 172a) beizubehalten, während sich die Separatorführung (125) relativ zu dem Stapeltisch (16, 16a) bewegt und/oder sich der Stapeltisch (16, 16a) relativ zu der Separatorführung (125) bewegt,
insbesondere wobei:
die Separatorführung (125) entlang der ersten Richtung zwischen dem ersten und dem zweiten Umlenker (1301, 1302) angeordnet ist; und/oder
die Separatorführung (125) ein Paar von Führungsflächen zum Führen des Faltens der Separatorfolie (122) umfasst und ein Abstand zwischen dem ersten und dem zweiten Umlenker (1301, 1302) größer ist als ein Abstand zwischen den Führungsflächen.

3. Vorrichtung (1, 1a) nach Anspruch 1 oder 2, wobei:
entlang der ersten Richtung der erste Umlenker (1301) zwischen dem ersten Klebstoffapplikator (171, 171a) und der Separatorführung (125) angeordnet ist und/oder der zweite Umlenker (1302) zwischen der Separatorführung (125) und dem zweiten Klebstoffapplikator (172, 172a) angeordnet ist; und/oder
der erste Umlenker (1301) und/oder der zweite Umlenker (1302) jeweils eine Umlenkrolle sind oder umfassen, die zwischen der Separatorführung (125) und dem Stapeltisch (16, 16a) angeordnet ist; und/oder
der erste Umlenker (1301) und/oder der zweite Umlenker (1302) relativ zu der Separatorführung (125) zumindest entlang der ersten Richtung fixiert ist/sind oder dazu eingerichtet ist/sind, relativ zu der Separatorführung (125) zumindest entlang der ersten Richtung fixiert zu werden.

4. Vorrichtung (1, 1a) nach einem der vorhergehenden Ansprüche, wobei der erste Umlenker (1301) und/oder der zweite Umlenker (1302) dazu eingerichtet ist/sind, die Separatorfolie (122) derart umzulenken, dass:
ein Winkel zwischen der Separatorfolie (122) und dem ersten bzw. zweiten Klebstoffapplikator (171, 171a, 172, 172a) um weniger als 20°, vorzugsweise um weniger als 10° variiert, während der erste bzw. zweite Klebstoffapplikator (171, 171a, 172, 172a) den Klebstoff auf einen Abschnitt (1221, 1222) der Separatorfolie (122) aufbringt, auf dem eine Elektrode (1112, 1122) angeordnet werden soll; und/oder
ein Abstand zwischen der Separatorfolie (122) und dem ersten bzw. zweiten Klebstoffapplikator (171, 171a, 172, 172a) um weniger als 25%, vorzugsweise um weniger als 10% variiert, während der erste bzw. zweite Klebstoffapplikator (171, 171a, 172, 172a) den Klebstoff auf den Abschnitt (1221, 1222) der Separatorfolie (122) aufbringt, auf dem die Elektrode (1112, 1122) angeordnet werden soll.

5. Vorrichtung (1, 1a) nach einem der vorhergehenden Ansprüche, wobei:
die Elektrodenzuführungseinheit (111, 112, 141, 142, 151, 152) eine erste Elektrodenzuführungseinheit (111, 141, 151), die dazu eingerichtet ist, eine Vielzahl von ersten Elektroden (1112) bereitzustellen, und eine zweite Elektrodenzuführungseinheit (112, 142, 152), die dazu eingerichtet ist, eine Vielzahl von zweiten Elektroden (1122) bereitzustellen, umfasst, und die Separatorführung (125) und/oder der Stapeltisch (16, 16a) dazu eingerichtet ist/sind, sich zwischen der ersten und der zweiten Elektrodenzuführungseinheit (111, 112, 141, 142, 151, 152) entlang der ersten Richtung vor und zurück zu bewegen; und/oder
die Separatorführung (125), der erste Klebstoffapplikator (171), der zweite Klebstoffapplikator (172), der erste Umlenker (1301) und/oder der zweite Umlenker (1302) zumindest entlang der ersten Richtung fixiert sind oder dazu eingerichtet sind, zumindest entlang der ersten Richtung fixiert zu werden, und der Stapeltisch (16) dazu eingerichtet ist, sich entlang der ersten Richtung vor und zurück zu bewegen, oder der Stapeltisch (16a) zumindest entlang der ersten Richtung fixiert ist oder dazu eingerichtet ist, zumindest entlang der ersten Richtung fixiert zu werden, und die Separatorführung (125), der erste Klebstoffapplikator der zweite Klebstoffapplikator (172a), der erste Umlenker (1301) und/oder der zweite Umlenker (1302) dazu eingerichtet sind, sich entlang der ersten Richtung vor und zurück zu bewegen; und/oder
die Separatorführung (125), der erste Klebstoffapplikator (171, 171a), der zweite Klebstoffapplikator (172, 172a), der erste Umlenker (1301) und/oder der zweite Umlenker (1302) in und/oder auf einem beweglichen Schlitten (18) angeordnet sind, der dazu eingerichtet ist, sich entlang der ersten Richtung vor und zurück zu bewegen.

6. Vorrichtung (1, 1a) nach einem der vorhergehenden Ansprüche, wobei:
der erste Klebstoffapplikator (171, 171a) und/oder der zweite Klebstoffapplikator (172, 172a) dazu eingerichtet ist/sind, einen Klebstoff auf einen jeweiligen Abschnitt (1221, 1222) der Separatorfolie (122) aufzubringen, während der Abschnitt (1221, 1222) auf eine Elektrode (1112, 1122) gefaltet wird, die auf dem Stapeltisch (16, 16a) angeordnet ist; und/oder
der erste Klebstoffapplikator (171, 171a) und/oder der zweite Klebstoffapplikator (172, 172a) ferner dazu eingerichtet ist/sind, den Klebstoff auf eine Elektrode (1112, 1122) aufzubringen, die auf dem Stapeltisch (16, 16a) angeordnet ist, während ein Abschnitt (1221, 1222) der Separatorfolie (122) auf die Elektrode (1112, 1122) gefaltet wird, die auf dem Stapeltisch (16, 16a) angeordnet ist, insbesondere wobei die Vorrichtung (1, 1a) den ersten Klebstoffapplikator (171, 171a) und den zweiten Klebstoffapplikator (172, 172a) umfasst und wobei der erste Klebstoffapplikator (171, 171a) dazu eingerichtet ist, den Klebstoff auf einen Abschnitt (1221) der Separatorfolie (122) aufzubringen, der eine Elektrode (1122) bedecken soll, die auf dem Stapeltisch (16, 16a) angeordnet ist, während der zweite Klebstoffapplikator (171, 171a) den Klebstoff auf die Elektrode (1122) aufbringt, und/oder der zweite Klebstoffapplikator (172, 172a) dazu eingerichtet ist, den Klebstoff auf einen Abschnitt (1222) der Separatorfolie (122) aufzubringen, der eine Elektrode (1112) bedecken soll, die auf dem Stapeltisch (16, 16a) angeordnet ist, während der erste Klebstoffapplikator (171, 171a) den Klebstoff auf die Elektrode (1112) aufbringt.

7. Vorrichtung (1, 1a) nach einem der vorhergehenden Ansprüche, wobei der erste Umlenker (1301) und/oder der zweite Umlenker (1302) dazu eingerichtet ist/sind, Druck auf einen Abschnitt (1221, 1222) der Separatorfolie (122) auszuüben, der auf eine Elektrode (1112, 1122) gefaltet ist oder gefaltet wird, die auf dem Stapeltisch (16, 16a) angeordnet ist, um Klebstoff zu verteilen, der zwischen dem Abschnitt (1221, 1222) der Separatorfolie (122) und der Elektrode (122) angeordnet ist.

8. Vorrichtung (1, 1a) nach einem der vorhergehenden Ansprüche, wobei:
die Elektrodenzuführungseinheit (111, 112, 141, 142, 151, 152) eine Elektrodenrolle (111, 112) ist oder umfasst, auf der eine Elektrodenfolie (1111, 1121) mit einer Vielzahl von darauf gebildeten Elektroden (1112, 1122) abgewickelt wird;
die Separatorzuführungseinheit (121) eine Separatorrolle (121) ist oder umfasst, in der eine Separatorfolie (122), die gefaltet wird, wenn die Elektroden (1112, 1122) gesetzt werden, die die Elektroden (1112, 1122) bedeckt und die mit den Elektroden (1112, 1122) gestapelt wird, abgewickelt wird;
der Stapeltisch (16, 16a) ein Tisch (16, 16a) ist oder einen Tisch umfasst, auf dem die Elektrode (1112, 1122) und die Separatorfolie (122) auf der oberen Fläche gesetzt werden;
die Separatorführung (125) die Faltrichtung der Separatorfolie (122) führt;
der erste Klebstoffapplikator (171, 171a, 172, 172a) ein Paar von oberen Düsen (171, 171a, 172, 172a) ist oder umfasst, die einen Klebstoff auf zumindest einen Teil der Separatorfolie (122) oder der Elektrode (1112, 1122) aufbringen, die auf dem Tisch (16, 16a) sitzt; und
der erste Umlenker (1301, 1302) ein Paar von Druckrollen ist oder umfasst, die die Separatorfolie (122) drücken, die von der Separatorführung (125) geführt wird.

9. Verfahren zum Herstellen einer Elektrodenanordnung (10) zur Verwendung in einer Batterie, wobei das Verfahren die folgenden Schritte umfasst:
Anordnen eines ersten Abschnitts (1221) einer kontinuierlichen Separatorfolie (122) auf einem Stapeltisch (16, 16a) unter Verwendung einer Separatorführung (125) zum Führen der Separatorfolie (122);
Aufbringen eines Klebstoffs auf zumindest einen Teil des ersten Abschnitts (1221) der Separatorfolie (122) unter Verwendung eines ersten Klebstoffapplikators (171, 171a), während der erste Abschnitt (1221) auf dem Stapeltisch (16, 16a) angeordnet wird; und
Anordnen einer ersten Elektrode (1112) auf dem ersten Abschnitt (1221) der Separatorfolie (122),
wobei die Separatorführung (125) und der Stapeltisch (16, 16a) relativ zueinander bewegt werden, um den ersten Abschnitt (1221) auf dem Stapeltisch (16, 16a) anzuordnen, und die Separatorfolie (122) durch einen ersten Umlenker (1301), der zwischen der Separatorführung (125) und dem Stapeltisch (16, 16a) angeordnet ist, umgelenkt wird, um eine Orientierung und/oder einen Abstand der Separatorfolie (122) relativ zu dem ersten Klebstoffapplikator (171, 171a) beizubehalten, während sich die Separatorführung (125) und der Stapeltisch (16, 16a) relativ zueinander bewegen.

10. Verfahren nach Anspruch 9, ferner umfassend:
Falten der Separatorfolie (122), um die erste Elektrode (1112), die auf dem ersten Abschnitt (1221) angeordnet ist, mit einem zweiten Abschnitt (1222) der Separatorfolie (122) zu bedecken, wobei die Separatorfolie (122) unter Verwendung der Separatorführung (125) gefaltet wird, um die Separatorfolie (122) zu führen;
Aufbringen eines Klebstoffs auf zumindest einen Teil des zweiten Abschnitts (1222) der Separatorfolie (125) unter Verwendung eines zweiten Klebstoffapplikators (171, 171a), während der zweite Abschnitt (1222) auf der ersten Elektrode (1112) angeordnet wird; und
Anordnen einer zweiten Elektrode (1122) auf dem zweiten Abschnitt (1222) der Separatorfolie (122),
insbesondere wobei die Separatorführung (125) und der Stapeltisch (16, 16a) relativ zueinander bewegt werden, um die Separatorfolie (122) zu falten, und die Separatorfolie (122) durch einen zweiten Umlenker (1302), der zwischen der Separatorführung (125) und dem Stapeltisch (16, 16a) angeordnet ist, umgelenkt wird, um eine Orientierung und/oder einen Abstand der Separatorfolie (122) relativ zu dem zweiten Klebstoffapplikator (172, 172a) beizubehalten, während sich die Separatorführung (125) und der Stapeltisch (16, 16a) relativ zueinander bewegen.

11. Verfahren nach Anspruch 9 oder 10, wobei das Verfahren ferner Folgendes umfasst:
Aufbringen des Klebstoffs auf die erste Elektrode (1112), die auf dem ersten Abschnitt (1221) der Separatorfolie (122) angeordnet ist, und/oder auf zumindest einen Teil eines Abschnitts (1222) der Separatorfolie (122), der die erste Elektrode (1112) bedecken soll, und/oder
Aufbringen des Klebstoffs auf die zweite Elektrode (1122), die auf dem zweiten Abschnitt (1222) der Separatorfolie (122) angeordnet ist, und/oder auf zumindest einen Teil eines Abschnitts (1221) der Separatorfolie (122), der die zweite Elektrode (1122) bedecken soll,
insbesondere wobei der Klebstoff auf den Teil des zweiten Abschnitts (1222) der Separatorfolie (122) und auf die erste Elektrode (1112), die auf dem ersten Abschnitt (1221) der Separatorfolie (122) angeordnet ist, zumindest teilweise gleichzeitig aufgebracht wird.

12. Verfahren nach einem der Ansprüche 9 bis 11, wobei:
das Verfahren das Schneiden einer ersten Elektrodenfolie (1111) umfasst, die von einer ersten Elektrodenrolle (111) abgewickelt wird, um eine Vielzahl von ersten Elektroden (1112) zu bilden;
das Anordnen des ersten Abschnitts (1221) der Separatorfolie (122) ist oder umfasst: Führen der Separatorfolie (122), die von einer Separatorrolle (121) abgewickelt wird, entlang einer Separatorführung (125), Setzen der Separatorfolie (122) auf einem Tisch (16, 16a) in einem Zustand, in dem eine erste Druckrolle (1301) die Separatorfolie (122) drückt, die von der Separatorführung (125) geführt wird, und ein Klebstoff auf einen ersten Bereich (1221) der Separatorfolie (122) von einer ersten oberen Düse (171, 171a) aufgebracht wird;
das Anordnen der ersten Elektrode (1112) auf dem ersten Abschnitt (1221) der Separatorfolie (122) das Setzen der ersten Elektrode (1112) auf einem ersten Bereich (1221) der Separatorfolie (122) ist oder umfasst;
das Aufbringen des Klebstoffs auf zumindest den Teil des ersten Abschnitts (1221) der Separatorfolie (122) das Aufbringen eines Klebstoffs auf einen ersten Bereich (1221) der Separatorfolie (122) von einer ersten oberen Düse (171, 171a) ist oder umfasst; und
das Verfahren das Falten der Separatorfolie (122) in einer Faltrichtung unter Führung durch die Separatorführung (125) umfasst, so dass ein zweiter Bereich (1222) der Separatorfolie (122) die erste Elektrode (1112) bedeckt.

13. Elektrodenanordnung (10) zur Verwendung in einer Batterie, wobei die Elektrodenanordnung (10) eine Vielzahl von ersten Elektroden (1112) und eine Vielzahl von zweiten Elektroden (1122) umfasst, wobei:
die ersten und die zweiten Elektroden (1112, 1122) abwechselnd gestapelt und voneinander durch eine Separatorfolie (122) getrennt sind, die zwischen den ersten und den zweiten Elektroden (1112, 1122) in einer Zickzackform gefaltet ist; und
ein Klebstoff zwischen der Separatorfolie (122) und den ersten Elektroden (1112) und/oder zwischen der Separatorfolie (122) und den zweiten Elektroden (1122) angeordnet ist, wobei der Klebstoff dazu eingerichtet ist, in einer Elektrolytlösung zur Verwendung in einer Batteriezelle gelöst zu werden.

14. Elektrodenanordnung (10) nach Anspruch 13, wobei:
der Klebstoff dazu eingerichtet ist, in der Elektrolytlösung durch Anwendung von Wärme und/oder Druck gelöst zu werden; und/oder
ein Teil des Klebstoffs oder der gesamte Klebstoff in einer Vielzahl von Punkten und/oder Linien angeordnet ist; und/oder
zumindest ein Teil des Klebstoffs zwischen der Separatorfolie (122) und den ersten und/oder den zweiten Elektroden (1112, 1122) durch Aufbringen des Klebstoffs auf eine Fläche der jeweiligen Elektrode (1112, 1122) vor dem Anordnen der Fläche auf der Separatorfolie (122) und/oder Bedecken der Fläche mit der Separatorfolie (122) angeordnet wurde, wobei ein Teil des Klebstoffs oder der gesamte Klebstoff zwischen der Separatorfolie (122) und den ersten und/oder den zweiten Elektroden (1112, 1122) durch Aufbringen des Klebstoffs auf einen jeweiligen ersten Abschnitt (1221, 1222) der Separatorfolie (122) vor dem Anordnen einer ersten Fläche der jeweiligen Elektrode (1112, 1122) auf dem ersten Abschnitt (1221, 1222) der Separatorfolie (122) und durch Aufbringen des Klebstoffs auf eine zweite Fläche der jeweiligen Elektrode (1221, 1222) gegenüber der ersten Fläche vor dem Bedecken der zweiten Fläche der jeweiligen Elektrode (1221, 1222) mit einem jeweiligen zweiten Abschnitt (1222, 1221) der Separatorfolie (122) angeordnet wurde.

15. Batteriezelle, umfassend eine Elektrodenanordnung (10) nach Anspruch 13 oder 14 und ein Batteriegehäuse (70), das die Elektrodenanordnung (10) zusammen mit einer Elektrolytlösung aufnimmt, wobei der Klebstoff zumindest teilweise in der Elektrolytlösung gelöst wurde.

## Revendications

1. Appareil (1, 1a) pour la fabrication d'un ensemble d'électrodes (10) utilisé dans une batterie, l'appareil (1, 1a) comprenant :
un module de distribution d'électrodes (111, 112, 141, 142, 151, 152) configuré pour fournir une pluralité d'électrodes (1112, 1122);
un distributeur de séparateur (121) configuré pour fournir une feuille séparatrice continue (122) ;
un plateau d'empilement (16, 16a) pour empiler les électrodes (1112, 1122) dessus, la feuille séparatrice (122) étant pliée entre les électrodes (1112, 1122) pour former l'ensemble d'électrodes (10) ;
un guide séparateur (125) configuré pour guider le pliage de la feuille séparatrice (122), le guide séparateur (125) étant configuré pour se déplacer le long d'une première direction relativement au plateau d'empilement (16, 16a) et/ou le plateau d'empilement (16, 16a) étant configuré pour se déplacer dans la première direction relativement au guide séparateur (125) ;
un premier applicateur d'adhésif (171, 171a, 172, 172a) configuré pour appliquer un adhésif sur au moins une partie de la feuille séparatrice (122) située entre le guide séparateur (125) et le plateau d'empilement (16, 16a); et
un premier déflecteur (1301, 1302) configuré pour dévier la feuille séparatrice (122) entre le guide séparateur (125) et le plateau d'empilement (16, 16a) afin de maintenir une orientation et/ou une distance de la feuille séparatrice (122) relativement au premier applicateur d'adhésif (171, 171a, 172, 172a) tandis que le guide séparateur (125) se déplace relativement au plateau d'empilement (16, 16a) et/ou le plateau d'empilement (16, 16a) se déplace relativement au guide séparateur (125).

2. Appareil (1, 1a) selon la revendication 1, comprenant en outre:
un deuxième applicateur d'adhésif (172, 172a) configuré pour appliquer un adhésif sur au moins une partie de la feuille séparatrice (122) située entre le guide séparateur (125) et le plateau d'empilement (16, 16a); et
un deuxième déflecteur (1302) configuré pour dévier la feuille séparatrice (122) entre le guide séparateur (125) et le plateau d'empilement (16, 16a) afin de maintenir une orientation et/ou une distance de la feuille séparatrice (122) relativement au deuxième applicateur d'adhésif (172, 172a,) tandis que le guide séparateur (125) se déplace relativement au plateau d'empilement (16, 16a) et/ou le plateau d'empilement (16, 16a) se déplace relativement au guide séparateur (125).
en particulier :
le guide séparateur (125) étant agencé entre les premier et deuxième déflecteurs (1301, 1302) dans la première direction ; et/ou
le guide séparateur (125) comprenant une paire de surfaces de guidage pour guider le pliage de la feuille séparatrice (122) et une distance entre les premier et deuxième déflecteurs (1301, 1302) étant supérieure à une distance entre lesdites surfaces de guidage.

3. Appareil (1, 1a) selon la revendication 1 ou 2,
le premier déflecteur (1301) étant agencé, dans la première direction, entre le premier applicateur d'adhésif (171, 171a) et le guide séparateur (125) et/ou le deuxième déflecteur (1302) étant agencé entre le guide séparateur (125) et le deuxième applicateur d'adhésif (172, 172a) ; et/ou
le premier déflecteur (1301) et/ou le deuxième déflecteur (1302) étant ou comprenant chacun un rouleau déviateur agencé entre le guide séparateur (125) et le plateau d'empilement (16, 16A) ; et/ou
le premier déflecteur (1301) et/ou le deuxième déflecteur (1302) étant fixes ou configurés pour être fixes relativement au guide séparateur (125) au moins dans la première direction.

4. Appareil (1, 1a) selon une quelconque des revendications précédentes, le premier déflecteur (1301) et/ou le deuxième déflecteur (1302) étant configurés pour dévier la feuille séparatrice (122) de sorte :
qu'un angle entre la feuille séparatrice (122) et les premier et deuxième applicateurs d'adhésif (171, 171a, 172, 172a), respectivement, varie de moins de 20°, de préférence de moins de 10°, tandis que les premier et le deuxième applicateurs d'adhésif (171, 171a, 172, 172a) appliquent respectivement l'adhésif sur une section (1221, 1222) de la feuille séparatrice (122) sur laquelle une électrode (1112, 1122) doit être agencée ; et/ou
qu'une distance entre la feuille séparatrice (122) et les premier et deuxième applicateurs d'adhésif (171, 171a, 172, 172a), respectivement, varie de moins de 25%, de préférence de moins de 10%, tandis que les premier et le deuxième applicateurs d'adhésif (171, 171a, 172, 172a) appliquent respectivement l'adhésif sur ladite section (1221, 1222) de la feuille séparatrice (122) sur laquelle ladite électrode (1112, 1122) doit être agencée.

5. Appareil (1, 1a) selon une quelconque des revendications précédentes,
le module de distribution d'électrodes (111, 112, 141, 142, 151, 152) comprenant un premier module de distribution d'électrodes (111, 141, 151) configuré pour distribuer une pluralité de premières électrodes (1112) et un deuxième module de distribution d'électrodes (112, 142, 152) configuré pour distribuer une pluralité de deuxièmes électrodes (1122), et le guide séparateur (125) et/ou le plateau d'empilement (16, 16a) étant configurés pour aller et venir entre le premier et le deuxième modules de distribution d'électrodes (111, 112, 141, 142, 151, 152) dans la première direction ; et/ou
le guide séparateur (125), le premier applicateur d'adhésif (171), le deuxième applicateur d'adhésif (172), le premier déflecteur (1301) et/ou le deuxième déflecteur (1302) étant fixés ou configurés pour être fixés au moins dans la première direction, et le plateau d'empilement (16) étant configuré pour se déplacer en allant et venant dans la première direction, ou le plateau d'empilement (16a) étant fixe ou configuré pour être fixe au moins le long de la première direction, et le guide séparateur (125), le premier applicateur d'adhésif le deuxième applicateur d'adhésif (172a), le premier déflecteur (1301) et/ou le second déflecteur (1302) étant configurés pour se déplacer en allant et venant dans la première direction ; et/ou
le guide séparateur (125), le premier applicateur d'adhésif (171, 171a), le deuxième applicateur d'adhésif (172, 172a), le premier déflecteur (1301) et/ou le deuxième déflecteur (1302) étant agencés dans et/ou sur un chariot (18) configuré pour se déplacer en allant et venant dans la première direction.

6. Appareil (1, 1a) selon une quelconque des revendications précédentes,
le premier applicateur d'adhésif (171, 171a) et/ou le deuxième applicateur d'adhésif (172, 172a) étant configurés pour appliquer un adhésif sur une section respective (1221, 1222) de la feuille séparatrice (122), tandis que ladite section (1221, 1222) est pliée sur une électrode (1112, 1122) agencée sur le plateau d'empilement (16, 16a) ; et/ou
le premier applicateur d'adhésif (171, 171A) et/ou le deuxième applicateur d'adhésif (172, 172A) étant configurés, en outre, pour appliquer l'adhésif sur une électrode (1112, 1122) agencée sur le plateau d'empilement (16, 16a), tandis qu'une section (1221, 1222) de la feuille séparatrice (122) est pliée sur ladite électrode (1112, 1122) agencée sur le plateau d'empilement (16, 16a), en particulier l'appareil (1, la) comprenant le premier applicateur d'adhésif (171, 171a) et le deuxième applicateur d'adhésif (172, 172a), et le premier applicateur d'adhésif (171, 171a) étant configuré pour appliquer l'adhésif sur une section (1221) de la feuille séparatrice (122) qui doit couvrir une électrode (1122) agencée sur le plateau d'empilement (16, 16a) tandis que le deuxième applicateur d'adhésif (171, 171a) applique l'adhésif sur ladite électrode (1122) et/ou le deuxième applicateur d'adhésif (172, 172a) étant configuré pour appliquer l'adhésif sur une section (1222) de la feuille séparatrice (122) devant couvrir une électrode (1112) agencée sur le plateau d'empilement (16, 16a) tandis que le premier applicateur d'adhésif (171, 171a) applique l'adhésif sur ladite électrode (1112).

7. Appareil (1, 1a) selon une quelconque des revendications précédentes, le premier déflecteur (1301) et/ou le deuxième déflecteur (1302) étant configurés pour exercer une pression sur une section (1221, 1222) de la feuille séparatrice (122), pliée, ou en train de l'être, sur une électrode (1112, 1122) agencée sur le plateau d'empilement (16, 16a) pour étaler l'adhésif agencé entre ladite section (1221, 1222) de la feuille séparatrice (122) et ladite électrode (122).

8. Appareil (1, 1a) selon une quelconque des revendications précédentes,
le module de distribution d'électrodes (111, 112, 141, 142, 151, 152) étant, ou comprenant, une bobine d'électrode (111, 112) sur laquelle est déroulée une feuille d'électrode (1111, 1121) possédant une pluralité d'électrodes (1112, 1122) formées dessus ;
le module de distribution de séparateur (121) étant ou comprenant une bobine de séparateur (121) dans laquelle une feuille séparatrice (122), pliée lors du positionnement des électrodes (1112, 1122), couvrant les électrodes (1112, 1122), et étant empilée avec les électrodes (1112, 1122), est déroulée ;
le plateau d'empilement (16, 16a) étant ou comprenant un plateau (16, 16a) sur lequel l'électrode (1112, 1122) et la feuille séparatrice (122) sont positionnées sur la surface supérieure ;
le guide séparateur (125) guidant le sens du pliage de la feuille séparatrice (122) ;
le premier applicateur d'adhésif (171, 171a, 172, 172a) étant ou comprenant une paire de buses supérieures (171, 171a, 172, 172a) qui appliquent un adhésif sur au moins une partie de la feuille séparatrice (122) ou de l'électrode (1112, 1122) positionnée sur le plateau (16, 16a) ; et
le premier déflecteur (1301, 1302) étant ou comprenant une paire de rouleaux de pression appuyant sur la feuille séparatrice (122) guidée depuis le guide séparateur (125).

9. Procédé de fabrication d'un ensemble d'électrodes (10) utilisé dans une batterie, le procédé comprenant les étapes :
d'agencement d'une première section (1221) d'une feuille séparatrice continue (122) sur un plateau d'empilement (16, 16a) à l'aide d'un guide séparateur (125) pour guider la feuille séparatrice (122) ;
d'application d'un adhésif sur au moins une partie de ladite première section (1221) de la feuille séparatrice (122) à l'aide d'un premier applicateur d'adhésif (171, 171a) pendant que cette première section (1221) est agencée sur le plateau d'empilement (16, 16a) ; et
d'agencement d'une première électrode (1112) sur ladite première section (1221) de la feuille séparatrice (122),
le guide séparateur (125) et le plateau d'empilement (16, 16a) étant déplacés l'un par rapport à l'autre afin d'agencer la première section (1221) sur le plateau d'empilement (16, 16a), et la feuille séparatrice (122) étant déviée par un premier déflecteur (1301) agencé entre le guide séparateur (125) et le plateau d'empilement (16, 16a) pour maintenir une orientation et/ou une distance de la feuille séparatrice (122) relativement au premier applicateur d'adhésif (171, 171a) tandis que le guide séparateur (125) et le plateau d'empilement (16, 16a) se déplacent l'un par rapport à l'autre.

10. Procédé selon la revendication 9, comprenant en outre:
le pliage de la feuille séparatrice (122) pour couvrir la première électrode (1112) agencée sur la première section (1221), avec une deuxième section (1222) de la feuille séparatrice (122), la feuille séparatrice (122) étant pliée à l'aide du guide séparateur (125) pour guider la feuille séparatrice (122),
l'application d'un adhésif sur au moins une partie de ladite deuxième section (1222) de la feuille séparatrice (125) à l'aide d'un deuxième applicateur d'adhésif (171, 171a) tandis que ladite deuxième section (1222) est agencée sur la première électrode (1112) ; et
l'agencement d'une deuxième électrode (1122) sur ladite deuxième section (1222) de la feuille séparatrice (122), en particulier le guide séparateur (125) et le plateau d'empilement (16, 16a) se déplaçant l'un par rapport à l'autre pour plier la feuille séparatrice (122), et la feuille séparatrice (122) étant déviée par un deuxième déflecteur (1302) agencé entre le guide séparateur (125) et le plateau d'empilement (16, 16a) pour maintenir une orientation et/ou une distance de la feuille séparatrice (122) relativement au deuxième applicateur d'adhésif (172, 172a) tandis que le guide séparateur (125) et le plateau d'empilement (16, 16a) se déplacent l'un par rapport à l'autre.

11. Procédé selon la revendication 9 ou 10, le procédé comprenant en outre :
l'application de l'adhésif sur la première électrode (1112) agencée sur la première section (1221) de la feuille séparatrice (122) et/ou sur au moins une partie d'une section (1222) de la feuille séparatrice (122) qui doit couvrir la première électrode (1112), et/ou
l'application de l'adhésif sur la deuxième électrode (1122) agencée sur la deuxième section (1222) de la feuille séparatrice (122) et/ou sur au moins une partie d'une section (1221) de la feuille séparatrice (122) qui doit couvrir la deuxième électrode (1122),
en particulier l'adhésif étant appliqué sur ladite partie de la deuxième section (1222) de la feuille séparatrice (122) et sur la première électrode (1112) agencée sur la première section (1221) de la feuille séparatrice (122), simultanément, tout au moins en partie.

12. Procédé selon une quelconque des revendications 9 à 11,
le procédé comprenant la découpe d'une première feuille d'électrode (1111) déroulée d'une première bobine d'électrode (111) pour former une pluralité de premières électrodes (1112) ;
l'agencement de ladite première section (1221) de la feuille séparatrice (122) étant ou comprenant le guidage de la feuille séparatrice (122) déroulée d'une bobine de séparateur (121) le long d'un guide séparateur (125), le positionnement de la feuille séparatrice (122) sur un plateau (16, 16a) dans un état où un premier rouleau de pression (1301) appuie sur la feuille séparatrice (122) guidée par le guide séparateur (125), et qu'un adhésif soit appliqué sur une première section (1221) de la feuille séparatrice (122) depuis une première buse supérieure (171, 171a) ;
l'agencement de la première électrode (1112) sur ladite première section (1221) de la feuille séparatrice (122) comportant ou comprenant le positionnement de la première électrode (1112) sur une première section (1221) de la feuille séparatrice (122) ;
l'application de l'adhésif sur au moins ladite partie de la première section (1221) de la feuille séparatrice (122) comportant ou comprenant l'application d'un adhésif sur une première section (1221) de la feuille séparatrice (122) depuis une première buse supérieure (171, 171a) ; et
le procédé comprenant le pliage de la feuille séparatrice (122) dans un sens du pliage, guidé par le guide séparateur (125), de sorte qu'une deuxième section (1222) de la feuille séparatrice (122) couvre la première électrode (1112).

13. Ensemble d'électrodes (10) pour une utilisation dans une batterie, l'ensemble d'électrodes (10) comprenant une pluralité de premières électrodes (1112) et une pluralité de deuxièmes électrodes (1122),
les premières et deuxièmes électrodes (1112, 1122) étant tour à tour empilées et séparées l'une de l'autre par une feuille séparatrice (122) pliée entre les premières et deuxièmes électrodes (1112, 1122) dans une configuration en zigzag ; et
un adhésif étant agencé entre la feuille séparatrice (122) et les premières électrodes (1112) et/ou entre la feuille séparatrice (122) et les deuxièmes électrodes (1122), ledit adhésif étant configuré pour être dissous dans une solution électrolytique utilisée dans une cellule de batterie.

14. Ensemble d'électrodes (10) selon la revendication 13,
ledit adhésif étant configuré pour être dissous dans la solution électrolytique par l'application de la chaleur et/ou d'une pression ; et/ou
une partie ou l'intégralité de cet adhésif étant agencée dans une pluralité de points et/ou de lignes ; et/ou
au moins une partie dudit adhésif ayant été agencée entre la feuille séparatrice (122) et les premières et/ou deuxièmes électrodes (1112, 1122) par l'application de l'adhésif sur une surface de l'électrode respective (1112, 1122) avant d'agencer ladite surface sur la feuille séparatrice (122) et/ou de couvrir ladite surface avec la feuille séparatrice (122), une partie ou l'intégralité dudit adhésif étant agencée entre la feuille séparatrice (122) et les premières et/ou deuxièmes électrodes (1112, 1122) par l'application de l'adhésif sur une première section respective (1221, 1222) de la feuille séparatrice (122) préalablement à l'agencement d'une première surface de l'électrode respective (1112, 1122) sur ladite première section (1221, 1222) de la feuille séparatrice (122) et par l'application de l'adhésif sur une deuxième surface de l'électrode respective (1221, 1222) située face à la première surface avant de couvrir ladite deuxième surface de l'électrode respective (1221, 1222) avec une deuxième section respective (1222, 1221) de la feuille séparatrice (122).

15. Cellule de batterie comprenant un ensemble d'électrodes (10) selon la revendication 13 ou 14 et un boîtier de batterie (70) contenant l'ensemble d'électrodes (10) ainsi qu'une solution électrolytique, l'adhésif ayant été dissous dans la solution électrolytique au moins en partie.
